# EUROPEAN PATENT APPLICATION

(11) **EP 3 751 489 A1**
(43) Date of publication of application: **16.12.2020**
(21) Application number: 18873137.6
(22) Date of filing: 08.02.2018
(51) Int. Cl.: G06Q 20/34

(54) **FINANCIAL TRANSACTION CONTROL SYSTEM, APPLICATION THEREFOR, AND FINANCIAL TRANSACTION CONTROL METHOD**

(71) Applicant: Matsunaga, Chikara, Hyogo 6580032 (JP)
(72) Inventor: Matsunaga, Chikara, Hyogo 6580032 (JP)
(74) Representative: Horn Kleimann Waitzhofer Patentanwälte PartG mbB
(86) International application number: PCT/JP2018/004317
(87) International publication number: WO 2019/087416

(57) **Abstract**

Problem to be solved: To provide a financial transaction control system that makes it possible to prevent unauthorized use via skimming or identity fraud by a third party in financial transactions such as use of credit and use of debit. Solution: A financial transaction control system in which an open secret code and a close secret code are set and registered in a financial transaction processing application file generated for each user account. Authentication of an open secret code transmitted by a user terminal is required in processing for opening a financial transaction processing application file, and when financial transaction information is subsequently received from a financial transaction and editing processing for editing the financial transaction information in the financial transaction processing application file is performed, an approval request regarding the financial transaction information is transmitted to the user terminal, the financial transaction control system waits for a reply including approval information, and after authentication of a close secret code included in the approval information included in the reply. The transmitting processing for transmitting the financial transaction data to a payment management system and close processing for closing the financial transaction processing application file are performed.

## Description

### TECHNICAL FIELD

The present invention relates to the technical field of fraud prevention in financial transactions involving credit use and debit use.

### BACKGROUND ART

Financial transactions using a credit card, a cash card, or the like are widely spread because of high convenience. In recent years, electronic payment systems have become popular, and electronic payment using credit function applications and debit function applications incorporated into smart phones have been increasing.

Financial transactions using a credit function and a debit function are convenient and are expected to become more popular in the future, but there is also a problem associated with unauthorized use. When the cards are lost or stolen, there is a possibility that the cards are illegally used. There is also a possibility that skimming damage may occur.

To prevent unauthorized use of a credit card or a cash card, various measures are taken in the past.

One of the prior personal authentications means of the credit card is the sign in the slip. This traditional method is performed by matching a user sign entered in a signature column on a credit card back surface with a user sign entered by a user in the slip over the counter.

Another prior personal authentication means of the credit card is using an identification number. When a credit card is an IC card equipped with an IC chip, a personal identification code can be stored in the IC card, and a personal identification number may be used in place of the sign or in combination with a sign. For example, a PIN pad is connected to a credit card payment terminal installed at a store, and authentication processing is performed by matching a personal identification number inputted from a user via a PIN pad with a password stored in a memory of the IC chip.

Other prior personal authentication means of the credit card is using face image identification. For example, as shown in FIG. 25, JP10-217655 discloses a technology in which a pseudo three-dimensional facial photograph capable of three-dimensional visual recognition can be printed on a flat plastic credit card by a special printing technology.

Other prior personal authentication means of the credit card is using biological information authentication. If a credit card is an IC card equipped with an IC chip, biological information can be stored as identification information of the IC card owner, and for example, a biological information input device is connected to a credit card payment terminal installed at a store, and authentication processing is performed by matching the biological information inputted from the user via the biological information input device with the biological information stored in the memory of the IC chip.

For example, as shown in Fig.26, JP2012-73902 discloses a technology in which biological information is registered in a memory storage area of an IC chip of an ID card such as a credit card, and a device is connected to a credit card payment terminal installed at a store, and authentication processing is performed by matching the biological information inputted from the user via the device with the biological information stored in the memory of the IC chip.

For example, as shown in Fig.27, JP2014-512579 discloses a special IC card type credit card using biological information. This special IC card type credit card employs a special device called a fingerprint receiver. The user brings the thumb into contact with the fingerprint receiver, and allows data transmission between the IC chip of the credit card and the credit card payment terminal by processing the protocol of the credit card payment terminal while bringing the thumb into contact with the fingerprint receiver.

Prior art 1: JP 10-217655
Prior art 2: JP 2012-73902
Prior art 3: JP 2014-512579

### DISCLOSURE OF THE INVENTION

### THE PROBLEMS TO BE SOLVED

However, there are problems in the prior individual authentication processing described above.

When a sign of a user is used as the personal authentication means of a credit card, the security level is low. That is, the signature may be false. A signature column space for an important contract or the like is reserved in a wide space, and the written sign is uniquely associated, and the current of the contract society is secured to some extent. However, the sign column of the credit card is small, and a simplified sign is often used. In addition, the staff at the store may not have enough experience or enough skill in sign authentication. Sometimes, the identification of the signature is omitted.

Next, when a personal identification number is used as the personal identification means of the credit card, the security level is not enough. A personal identification number may be a four-digit number in general use. It may be inferred by third party and may be leaked out to a third party during the use of a credit card payment terminal in a certain financial transaction, so that a credit card may be illegally used.

Next, when a face image printed on the credit card is used as the personal identification means of the credit card, the security level is not sufficient. There is a possibility that the face image can be pasted to the other person, and if the impersonated person is a person who is close to the correct person in age, there is a possibility that the staff may consider this a correct person. Especially, a woman's appearance can easily change due to makeup, identity fraud can occur.

Next, when the biological information is used as the personal identification means of the credit card, the security level is relatively high, but the device for reading the biological information becomes a problem. Since a credit card is extremely popular, the number of credit card payment terminals is increased up to a significant number. Most of the credit card payment terminals are not equipped with such biological information reading devices. It is difficult to provide a credit card payment terminal with a reading device for biological information as an actual problem.

According to the prior personal identification means of the credit card disclosed in JP2014-512579, it can be said that the equipment modification is required on the credit card side since the special device such as the fingerprint receiver is provided on the credit card side. However, the user condition by the fingerprint receiver of the credit card payment terminal is limited to the thumb being brought into contact with the fingerprint receiver. That is, this means requires the card user to operate the credit card payment terminal by himself / herself. In most cases, the credit card payment terminal is installed in the shop counter, and the credit card payment terminal is operated by the clerk. It is the routine operation for the clerk to receive the credit card from the user and operate the credit card payment terminal with the received credit card. If the user operates the credit card payment terminal by himself / herself, it causes confusion at the shop counter. It is assumed that the prior personal identification means of the credit card disclosed in JP2014-512579 may be limited as the case that a user operates an ATM operation using a cash card by himself / herself.

As described above, various personal authentication processing in various security levels are tried for applying a credit card system, but there are problems for every prior personal authentication processing, and the problem of fraudulent use of a credit card has not been solved.

When a user notices the loss or unauthorized use of a credit card or a cash card, it is necessary to invalidate a credit card or a cash card to suppress damage by himself / herself.

For example, a user of a card who is aware of loss or theft is required to inform the card management company or the card management entrusted company of a notification indicating that a stolen credit card or a cash card should be invalidated via a telephone or a website. After the card management company or the card management entrusted company receives the notification, they correspond to the management host computer of the card company by performing invalidation registration of the corresponding credit card and cash card. When the credit card or the cash card is invalidated, no authentication of the financial transaction is performed even if financial transaction data including a corresponding card ID number is transmitted to the management host computer of the card company via the credit card payment terminal, so the user cannot be used the credit card payment.

The suspension of use of the credit card can be possible only after the card user aware of the loss of the credit card or the illegal use and performing the use suspension procedure. The time required is long. Also, once the credit card is temporarily suspended, the re-issuance process takes time and labor, and during the re-issuance processing period, there is a problem that the card member cannot utilize the credit card.

Furthermore, there is a problem that if the user possesses plural credit cards, but only a part of them is used, it is difficult for the user to be aware of lost or unauthorized use of a credit card.

At present, a credit card and a cash card are often used correctly, and in the case of loss or theft, it is regarded as an irregular accident state. The use suspension procedure of a credit card or a cash card is applied in the case of such irregular accident state. The loss or theft credit card and the cash card are put in a normal usable state until the actual use suspension processing is completed, so some actual damage can occur until the use suspension processing being completed.

In order to achieve the above-mentioned object, the present invention provides a financial transaction control system capable of reliably preventing unauthorized use such as unauthorized use by a third party and skimming by a third party in financial transactions in credit use, debit use, and the like.

### MEANS FOR SOLVING THE PROBLEMS

To solve the problem of fraudulent use of a credit card and a cash card, the inventor of the present invention finds the use of an application and an application file for managing prevention of such unauthorized use.

A financial transaction control system of the present invention for applying to a payment management system accompanying a credit use or a debit use, comprising: a financial transaction processing application file corresponding to each user account; a financial transaction processing application program that performs controlling each financial transaction processing program for each user account; wherein an open secret code and a close secret code are set in the financial transaction processing application file, wherein the financial transaction processing application program comprises; an open processing program for opening the financial transaction processing application file on the condition that the financial transaction processing application program performs authentication between an open secret code included in a financial transaction information input by a user matching with the set open secret code in the financial transaction processing application file; an editing processing program for editing the financial transaction information to the financial transaction processing application file according to a financial transaction information from a financial transaction entity to the user account; an approval request processing program for sending approval request information whether or not approving the financial transaction information to a user terminal, and waiting for the reply of an approval information from the user terminal; a transmitting processing program for transmitting the edited financial data in the financial transaction processing application file to the payment management system and a close processing program for closing the financial transaction processing application file on the condition that the financial transaction processing application program performs authentication between a close secret code included in the approval information input by the user matching with the set close secret code.

In the above configuration, the financial transaction control system according to the present invention employs a financial transaction processing application file corresponding to the account of the user in which "open secret code" to activate the "open processing" to open this file and "close secret code" to activate the "close processing" to close this file are used. The financial transaction control system also employs the financial transaction processing application, which performs "open processing" to open the financial transaction processing application file under the condition that the "input code" is matched with the "open secret code" and performs "editing processing" for writing the financial transaction information to the financial transaction processing application file. After these "open processing" and "editing processing", the financial transaction processing application adds the "user approval request processing" for waiting for a reply of approval information from a user terminal. This user approval request processing can secure user recognition of the credit card use status and the opportunity to interrupt the transaction by the user. The financial transaction processing application performs the "transfer processing" of the financial transaction processing application file data to the payment management system and waiting the input of the close secret code from the user. The "closing processing" of the financial transaction processing application file is performed and the financial transaction is executed normally under the condition that the "input code" is matched with the "close secret code". The user can surely recognize and approve the use state by the user in a simple and simple flow, and the unauthorized use which is not recognized by the user can be effectively protected.

The user ID information relating to a financial transaction is held in a user medium, and this user ID information in the user medium is utilized in the financial transaction processing. However, a variety of means for holding user ID information are possible. For example, the user ID information is held in a conventional card medium, and the user ID information is obtained by a conventional card reader. For example, the user ID information is held in a smart phone or a smart device, and the user ID information is obtained by a corresponding payment processing terminal.

The open secret code and the close secret code can be diverse. For example, there are a PIN code, a password, a one-dimensional code such as a bar code, a two-dimensional code such as a QR code, and biological information of a user such as a fingerprint pattern, a vein pattern, an iris pattern, a voiceprint pattern and facial image. It is also possible that the open secret code and the close secret code can be generated by combination or calculating based on a secret code input by the user and a terminal ID number of the particular user terminal.

In the present invention, setting and registering two secret codes, "open secret code" and "close secret code", achieves high level security.

In the prior art, the open secret code (password, biological information) at the opening of the processing exists. However, the close secret code (password, biological information) at the end of the processing does not exists at all. The present invention employs the technology requesting the secret code twice at the opening stage of the financial transaction application and at the closing stage of the financial transaction application, which is the original invention of the inventor of this present invention. The financial transaction processing application performs the authentication processing in the open processing of the financial transaction processing application file under the condition that the input open secret code included in the request information is matched with the set and registered open secret code applied to the financial transaction processing application file. Further, the financial transaction processing application performs the authentication processing in the close processing of the financial transaction processing application file to recognize user approval and close the file under the condition that the input close secret code included in the approval information is matched with the set and registered close secret code applied to the financial transaction processing application file. Thus, an open secret code input by an user is obtained just before the use of credit use or debit use has started, and a closed secret code input by an user is obtained at the time of the end of the credit use or the debit use.

If biological information is used as the open secret code and the close secret code, the user himself / herself can also be authenticated. When the user terminal is a smart phone, a biometric information reading device is often mounted on a smart phone. If the user does not have a personal biological information reading device and should use the device in a store, it is problem that the store is a malicious store or a device in the store is hacked. There is a possibility of leak of the biological information. To avoid such risk, it is better to use a biological information reading device provided on a smart phone or the like. The risk of the leak of the biological information is dramatically reduced.

Next, the inventor also invents the operation of a higher security level as follows.

The time required for the actual use of the credit card or the cash card in one day is extremely short and limited. For example, the credit card or the cash card operations are about several tens of seconds such as payment at the store. The credit card is used several times per day, but the actual use of the credit card or the cash card per one transaction is small, so the total time for the actual use of the credit card or the cash card per day is small. However, the current financial transaction system requires a credit card or a cash card in an effective state for all the time even the actual use time is small in a day, and changes a credit card or a cash card in an invalidate state only when it is found that the user's credit card is lost or stolen. The inventor of the present invention reverses this concept, so the credit card or the cash card is fixed to an invalid state as a basic state. It is the safest if the credit card or the cash card are turned in valid state and the operation is dynamically activated only at the moment of use at a store. A high security level can be achieved as long as it is performed with personal identification via a portable terminal such as a smart phone held by the user as means for validating the credit card or the cash card. Even if the user's card is lost or stolen, the credit card or the cash card cannot be easily used in the unauthorized use by the unauthorized person.

The concept is not conventionally known that the user's credit card is normally in an invalid state as a default state to protect malicious use, and the user's credit card is changed in an valid state when the user uses the credit card. In this way, if the valid / invalid state information can be finely changed by the user, effectively preventing user credit card from the unauthorized use such as the loss of the card and the spoofing use at the time of theft and the skimming.

The inventor of the present invention takes this original concept, and also adds a process of dynamic validating of an account immediately before the use of the credit card or the cash card in the store by the user, and thereafter adds a process for returning the credit card or the cash card to an invalid state as a default state.

In addition to the basic configuration described above, the financial transaction processing application of the financial transaction control system includes an availability status information state control part for controlling the switching of the availability status information indicating the validity state / invalidity state of the account of the user and the state of the possibility of acceptance of the financial transaction. The financial transaction processing application performs "invalid processing" via the availability status information state control part for maintaining the availability status information in an invalid state as the normal state and "switching processing" for switching the availability status information to the temporary effective state and "transfer processing" to the payment management system of the financial transaction processing application file data on the basis of the reply of the approval information from the user terminal, and performs an "invalid processing" of availability status information and "closing processing" consecutively.

That is, the flow of processing of the basic financial transaction control system described above comprises a flow of an open process → an editing process → an approval check process → a delivery process → a closing process, and a flow of processing of the improved financial transaction control system for enhancing the security level comprises an invalid default processing as a default process as a normal state → a flow of an open process → an editing process → an approval check process → an effective state switching process → a delivery process → an invalid default process → a closing process.

As described above, the financial transaction processing application maintains the availability status information in an invalid state by invalid default processing. When information transmitted from an user terminal indicates financial transaction processing request information for starting a financial transaction processing in the normal invalidation state, the financial transaction processing application performs (1) "the open processing" for opening a financial transaction processing application file related to an account of a user on-demand. That is, the processing of "starting up an application file (financial transaction processing application file) for conducting the processing is executed because the credit card use or the debit card use will be conducted. When the financial transaction processing application receives financial transaction information (that is, a request for payment in credit) relating to a user's account from a financial transaction entity (that is, a store or an EC site for permitting credit use) through the financial transaction processing application file, the financial transaction processing application performs (2) "the editing processing" for receiving and processing edition for writing the contents of the financial transaction information to the financial transaction processing application file.

Further, the financial transaction processing application performs (3) "the approval request processing and reception processing for approval confirmation" which consists of "approval request processing" for transmitting an approval request for asking whether or not to accept financial transaction information to a user terminal (smart phone) and "reception processing" waiting for the return of approval information from the user terminal as return to the approval request (For example, processing for displaying transaction contents on the screen of the smartphone, displaying the approval button and waiting for input of the approval button or input of biological information). Then the financial transaction processing application performs (4) "the switching processing for the availability status information state" for switching the availability status information state from the invalid state to the valid state temporarily on the basis of receiving the approval information from the user terminal (depression of an approval button and input of biological information) and the confirmation of the approval information in the approval confirmation processing. Then the financial transaction processing application performs (5) "the transfer processing to the payment management system" for delivering the financial transaction information written in the financial transaction processing application file to the payment management system. Then the financial transaction processing application performs (6) "the switching processing of the availability status information to the invalid state" for processing the return back to the invalid state of the availability status information as in normal state and performs (7) "the close processing" for terminating and closing the financial transaction processing application file.

That is, even if the financial transaction information from the store or the EC site is transmitted to the payment management system and the financial transaction processing application receives this transmitted financial transaction information, the default invalid state of the availability status information is kept on being maintained until the user presses the approval button. The financial transaction processing application records the financial transaction information in the financial transaction processing application file temporarily but suspends the financial transaction information and does not deliver it to the payment management system via the network. When an approval button is pressed by the user, the financial transaction processing application performs (4) "the switching processing for the availability status information state", (5) "the transfer processing to the payment management system", (6) "the switching processing of the availability status information to the invalid state", and (7) "the close processing" consecutively.

A user application can be available in the user terminal by the installation method or by the ASP via network. The user application interacts with the financial transaction control system to execute financial transaction control.

The user application includes: a "financial transaction processing request information generation processing" for generating financial transaction processing request information; a "financial transaction processing request information transmission processing" for transmitting the generated financial transaction processing request information to the financial transaction processing application; an "approval information generation processing" for generating approval information; and an "approval information reply processing" for returning the generated approval information to the financial transaction processing application.

In comparison with a simple configuration where an invalid state is allowed to be switched on and off, the abovementioned configuration can maintain the availability status information in the invalid state as default to enhance the security level. On the condition that there is an approval information from the user terminal, the financial transaction processing application can switch the availability status information from the invalid state to the valid state temporarily, and performs the transfer processing to the payment management system of the recorded data in the financial transaction processing application file, and performs the invalid default processing of the availability status information turning from temporarily valid state back to the invalid state, and performs the closing processing of the financial transaction processing application file consecutively.

As described above, if the continuous processing after entering the approval information from the user terminal is not performed, there is a possibility that the user account is left in an effective valid state over a few hours by the user forgetting to switch the availability status information back to the invalid state. In this case, the availability status information is left as valid state for a few hours while the user stays in the shopping mall or the like. To solve such a problem, the financial transaction processing application may introduce the time-out processing in the "switching processing for the availability status information state" to control the availability status information state of the user account. However, if the effective valid state of the user account is forcibly switched back to the invalid state when the predetermined time has expired left, other problems may occur. If the set predetermined time is not enough, the availability status information state may be switched to the invalid state during the financial procedure in an actual store. If the predetermined time is set to be too long, the valid state continues for a while so unauthorized access and skimming cannot be completely prevented.

Thus, the financial transaction control system of the present invention can be used as a card unauthorized use prevention system. The financial transaction processing application cannot use a financial transaction at normal time by invalid default processing. After performing the switching processing to a temporary effective state of availability status information when used in a store or an EC site, the user can use a credit card or a cash card, and continuously processes invalid default processing after completing the financial transaction, thereby preventing unauthorized use of the card effectively.

The financial transaction control system according to the present invention can switch the availability status information as valid state / invalid state, but it is preferable that it cannot switch the invalidation setting of an account based on the credit information by the financial institution side. In other words, when the user is in a state in which the credit utilization is prohibited due to the credit over state or the failure of the account payment of the user, the account is invalidated based on the credit information by the financial institution side, but it is impossible to allow the user to freely rewrite the account status.

Therefore, the following operations are preferable.

When the setting of "the invalidation setting of user's account" or "the invalidation setting of a financial transaction relating to user's account" set by the financial institution side based on the credit on the payment management system is in effective valid state, the payment management system accepts the control of switching the availability status information by the "switching processing for the availability status information state" of the financial transaction processing application.

On the contrary, when the setting of "the invalidation setting of user's account" or "the invalidation setting of a financial transaction relating to user's account" set by the financial institution side is in invalid state, this invalid state is maintained, and the payment management system does not accept the control of switching the availability status information by the "switching processing for the availability status information state" of the financial transaction processing application.

As described above, the setting of the invalid status of the availability status information based on the credit information may be prioritized, and the actual detail operation may be determined whether the switching setting of the availability status information by the operation of the user is disabled or not. For example, either of the setting of the invalid state of the availability status information based on the credit information and the switching setting of the availability status information by the user's operation can be selected by the financial institution side.

### EFFECT OF THE INVENTION

According to the financial transaction control system of the present invention, card unauthorized use can be prevented.

The financial transaction control system of the present invention employs a financial transaction processing application file corresponding to a user's account setting an "open secret code" and a "close secret code".

When matching the input code with the open secret code, the financial transaction processing application performs the "open process" for opening the financial transaction processing application file and "editing processing" for writing the financial transaction information into the financial transaction processing application file. When matching the input code with the close secret code, the financial transaction processing application performs "transfer processing" to the payment management system of the data in the financial transaction processing application file and performs "closing processing" of the financial transaction processing application file through. It is possible for the user to surely recognize and approve the use state in a simple flow, and to effectively protect unauthorized use which is not recognized by the user.

### BRIEF DESCRIPTION OF DRAWINGS

Fig.1 is a schematic view showing the configuration of the financial transaction control system 100A of Embodiment 1.
Fig.2 is a system block drawing showing the basic operation flow (1) of credit use of the financial transaction control system 100A according to the Embodiment 1.
Fig.3 is a system block drawing showing the basic operation flow (2) of credit use of the financial transaction control system 100A according to the Embodiment 1.
Fig.4 is a system block drawing showing the basic operation flow (3) of credit use of the financial transaction control system 100A according to the Embodiment 1.
Fig.5 is a system block drawing showing the basic operation flow (4) of credit use of the financial transaction control system 100A according to the Embodiment 1.
Fig.6 is a system block drawing showing the basic operation flow (5) of credit use of the financial transaction control system 100A according to the Embodiment 1.
Fig.7 is a schematic view (1) showing an example of an operation screen in a user terminal 200 of the financial transaction control system 100A according to the Embodiment 1.
Fig.8 is a schematic view (2) showing an example of an operation screen in a user terminal 200 of the financial transaction control system 100A according to the Embodiment 1.

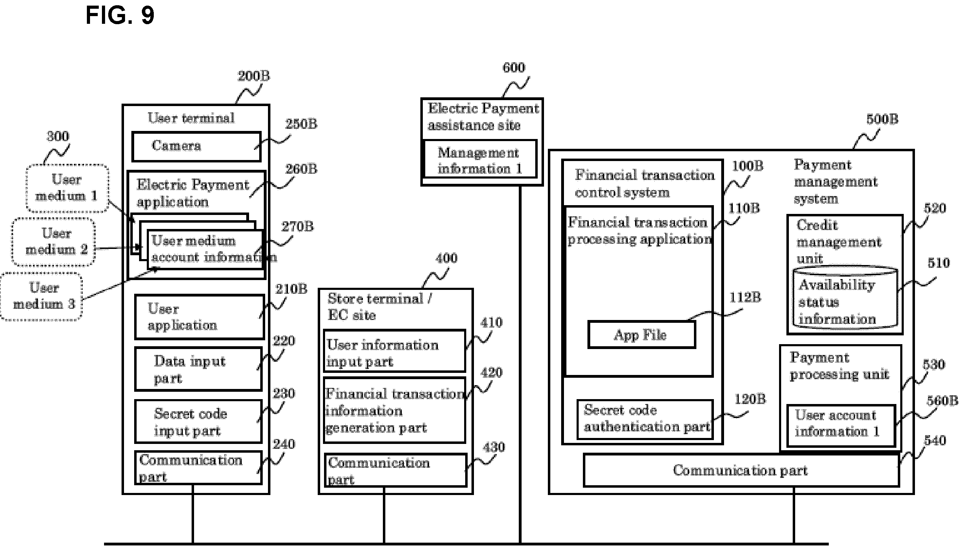

Fig.9 is a schematic view showing the configuration of the financial transaction control system 100B of Embodiment 2.
Fig.10 is a system block drawing showing the basic operation flow (1) of credit use of the financial transaction control system 100B according to the Embodiment 2.
Fig.11 is a system block drawing showing the basic operation flow (2) of credit use of the financial transaction control system 100B according to the Embodiment 2.
Fig.12 is a system block drawing showing the basic operation flow (3) of credit use of the financial transaction control system 100B according to the Embodiment 2.
Fig.13 is a system block drawing showing the basic operation flow (4) of credit use of the financial transaction control system 100B according to the Embodiment 2.
Fig.14 is a system block drawing showing the basic operation flow (5) of credit use of the financial transaction control system 100B according to the Embodiment 2.

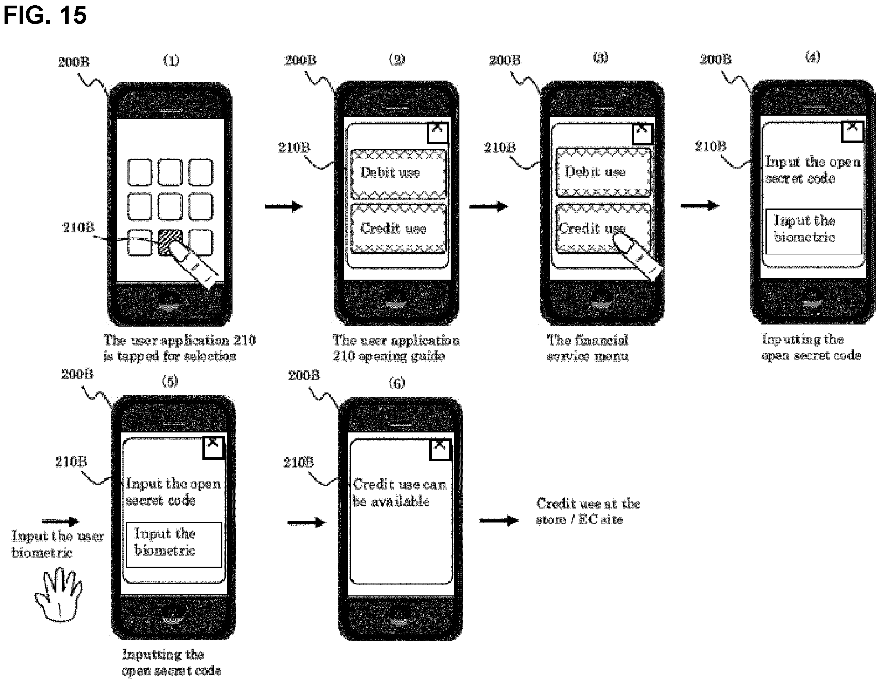

Fig.15 is a schematic view (1) showing an example of an operation screen in a user terminal 200B of the financial transaction control system 100B according to the Embodiment 2.
Fig.16 is a schematic view (2) showing an example of an operation screen in a user terminal 200B of the financial transaction control system 100B according to the Embodiment 2.
Fig.17 is a schematic view showing the configuration of the financial transaction control system 100C of Embodiment 3.
Fig.18 is a system block drawing showing the basic operation flow (1) of credit use of the financial transaction control system 100C according to the Embodiment 3.
Fig.19 is a system block drawing showing the basic operation flow (2) of credit use of the financial transaction control system 100C according to the Embodiment 3.
Fig.20 is a system block drawing showing the basic operation flow (3) of credit use of the financial transaction control system 100C according to the Embodiment 3.
Fig.21 is a system block drawing showing the basic operation flow (4) of credit use of the financial transaction control system 100C according to the Embodiment 3.
Fig.22 is a system block drawing showing the basic operation flow (5) of credit use of the financial transaction control system 100C according to the Embodiment 3.
Fig.23 is a schematic view (1) showing an example of an operation screen in a user terminal 200C of the financial transaction control system 100C according to the Embodiment 3.
Fig.24 is a schematic view (2) showing an example of an operation screen in a user terminal 200C of the financial transaction control system 100C according to the Embodiment 3.

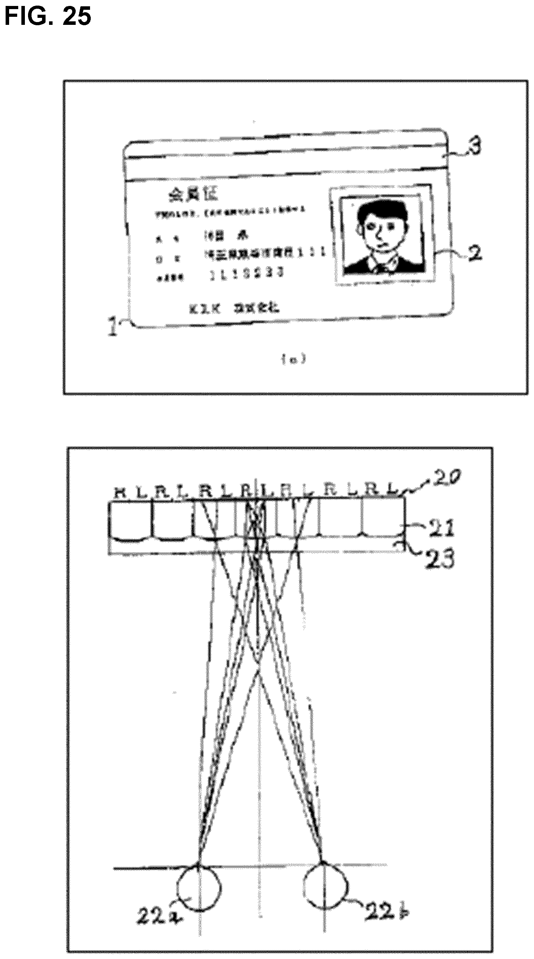

Fig.25 is a schematic view showing the structure of a conventional credit card system disclosed in JP 10-217655 in the prior art.

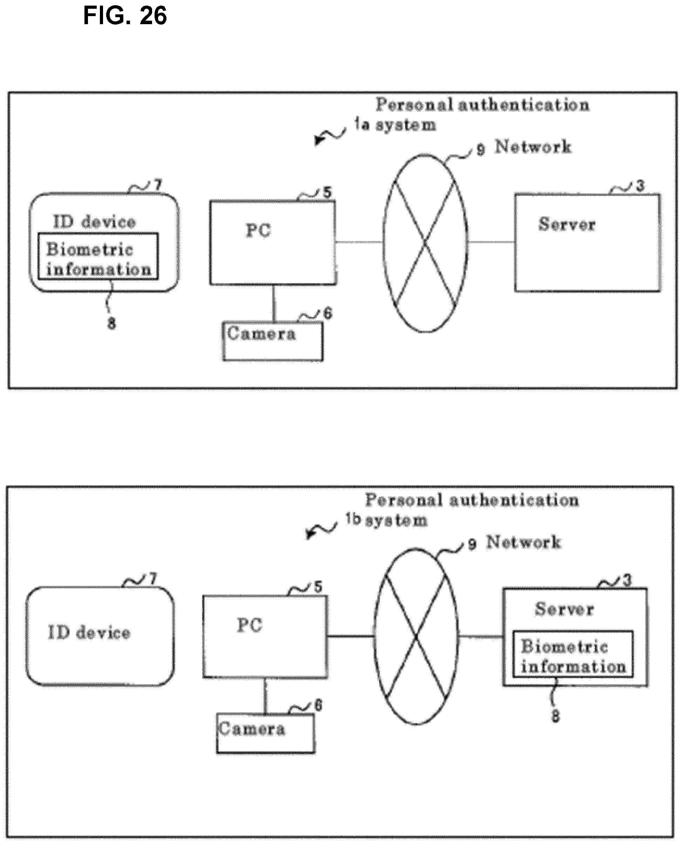

Fig.26 is a schematic view showing the structure of a conventional credit card system disclosed in JP2012-73902 in the prior art.

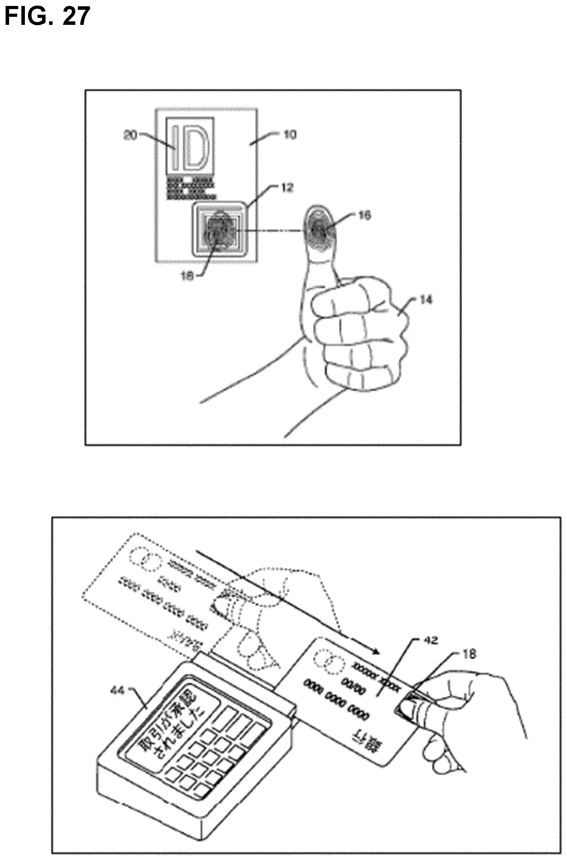

Fig.27 is a schematic view showing the structure of a conventional credit card system disclosed in JP2014-512579 in the prior art.

### DETAILED DESCRIPTION OF THE PREFERRED EMBODIMENT

Some embodiments of a financial transaction control system according to the present invention are described below with reference to the relevant drawing. Needless to add, the claims of the present invention include but are not limited to the application, configuration, or quantity shown in the following embodiments.

Hereinafter, as an Embodiment 1, a financial transaction control system 100A for performing financial transaction processing by using a user ID holding medium 300 such as a credit card or a cash card is shown. In this example, a financial transaction processing application file 112a is set an open secret code at the time of opening processing and a close secret code at the time of closing processing.

As an Embodiment 2, a financial transaction control system 100B used for an electronic credit financial transaction processing and an electronic debit financial transaction processing based on smart phone 200 is shown, wherein the user ID information necessary for financial transaction processing is included in the smart phone 200 instead of the user ID holding medium 300.

As an Embodiment 3, a financial transaction control system 100C is shown, and the same as Embodiment 2, it is used for an electronic credit financial transaction processing and an electronic debit financial transaction processing based on smart phone 200 in which a user ID holding medium 300 is not required. In addition to this configuration, the security level is enhanced by applying availability status information and an availability status information control part for switching the availability status information in invalid state in the normal time as the default state.

### Embodiment 1

A financial transaction control system 100A according to the present invention and a user application 210A using the same are described.

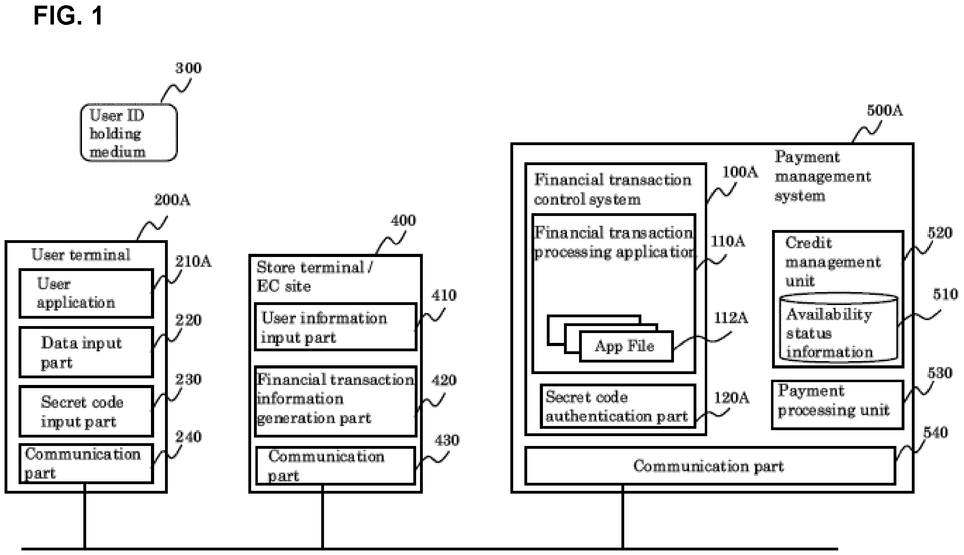

Fig.1 is a schematic view showing the configuration of the financial transaction control system 100A of Embodiment 1 and a user application 210A according to the Embodiment 1. In addition to a financial transaction control system 100A and a user application 210A, a user terminal 200A, a user medium 300, a store terminal / EC site 400, and a payment management system 500A are shown in Fig.1.

The financial transaction control system 100A is a system for controlling a financial transaction accompanied by credit use or debit use by a user.

The financial transaction control system 100A is provided between the user terminal 200A and the payment management system 500A. It may be provided on the user terminal 200A or on the payment management system 500A. In this example, the financial transaction control system 100A is provided on the payment management system 500A.

In this example, the financial transaction control system 100A includes at least a financial transaction processing application 110A and the secret code authentication part 120A. These are described in detail later

The user terminal 200A is preferably a terminal carried by a user such as a smart phone. The user terminal 200A includes a user application 210A, a data input part 220, a secret code input part 230, and a communication part 240.

The user application 210A is an application that exchanges data with the financial transaction control system 100. By installing the user application 210A to the user terminal 200A, the user can use the financial transaction service of credit use and debit use of the present invention via the user terminal 200A.

The data input part 220 is an unit for accepting input of data from the user via the user interface such as a touch display or voice input portion equipped with a general portable terminal such as a smart phone.

The secret code input part 230 is a device for receiving input of a secret code from the user.

When the secret code is PIN code or a password, the secret code input part 230 is input devices such as a PIN pad, a keyboard, or a touch panel. The data input part 220 may concurrently serve as the secret code input part 230. As the secret code, four or more digits or character string is preferred. The secret code may be calculated by a certain algorithm such as combining a PIN code inputted by a user with a terminal ID number of a user terminal 200A.

When the secret code is a printed code such as one-dimensional code of bar code and two-dimensional code of QR code, a printed code reader or a camera may be employed as an input device.

Biometric information can be employed as the secret code. As biometric information, fingerprint pattern information, finger vein pattern information, palm vein pattern information, iris pattern information, face image information, voiceprint pattern information, and the like can be employed. If the biometric information is used as a secret code, the secret code input part 230 of the user terminal 200A is equipped with a biometric information input device (such as a fingerprint reader, a vein reader, an iris reader, a camera, a microphone, etc.) that can read corresponding biometric information.

The communication part 240 may be a communication function provided by the user terminal 200A.

Next, the user medium 300 is described below.

The user medium 300 is a medium used when a credit is used or when a debit is used. It is typically a magnetic stripe card, an IC card, a non-card type object with IC chip embedded, a micro IC chip embedded in a human body, and the like. Various kinds of information such as user ID information, card information, and information necessary for a financial transaction are stored in the user medium 300. By presenting the user medium 300 to the store terminal / EC site 400, a financial transaction with credit use or debit use can be applied.

The financial transaction control system for performing electronic credit financial transaction processing and electronic debit financial transaction processing required by the financial transaction via the smart phone without using an user medium 300 is shown in Embodiment 2.

Next, the store terminal / EC site 400 is described below.

The store terminal / EC site 400 is a terminal installed in a store provided with a function for exchanging transaction information with a payment management system 500A or in an electronic commerce web site on the internet. The shop terminal / EC site 400 includes the user information input part 410, the financial transaction information generation part 420 and communication part 430.

In this example, the user information input part 410 is a card reader corresponding to the user medium 300 and reads the card information and the user ID information from the user medium 300.

The financial transaction information generation part 420 is an unit for generating financial transaction information accompanying the service of credit use and debit use desired by the user. For example, the financial transaction information includes the card information, the user ID information, the shop information the transaction person information, the payment amount and ID information of the payment management system 500A. The financial transaction information generation part 420 transmits the financial transaction information to the payment management system 500A via network via the communication part 430.

Next, the payment management system 500A is described below.

The payment management system 500A is a system managed by a financial institution, a credit company, etc. It includes an availability status information 510, a credit management unit 520, and a payment processing unit 530. Data can be exchanged with the financial transaction control system 100A, and further, data can be communicated with the store terminal / EC site 400 and the user terminal 200A via network.

The availability status information 510 is information indicating the effective validity state of the account of the user managed on the payment management system 500A or indicating an effective validity state of the financial transaction acceptance for the user's account.

In this example configuration, the availability status information 510 is managed by the credit management unit 520. When the availability status information 510 indicates an effective valid state, the payment management system 500A can receive a financial transaction accompanied by the credit use or the debit use by the user. Conversely, when the availability status information 510 indicates an invalid state, the payment management system 500A rejects the financial transaction accompanied by the credit use or the debit use by the user.

In general, for the credit user who has no problem in credit, the availability status information 510 of the user is maintained in an effective valid state.

The credit management unit 520 may be the same as the credit management unit equipped with a general payment management system managed by the financial institution and the credit company or the like. It manages and controls the availability status information 510.

The payment processing part 530 is similar to a payment processing part equipped with a general payment management system managed by the financial institution and the credit sales company, etc. It performs payment processing on the basis of the financial transaction information received from the store terminal / EC site 400 under the condition that the availability status information is confirmed as an effective valid state.

When the financial transaction information of the corresponding user ID information is transmitted from the store terminal / EC site 400, the payment processing part 530 does not start processing the financial transaction information as it is. The payment processing part 530 once transmits the financial transaction information to the financial transaction processing application 110A and waits the processing result from the financial transaction processing application 110A. After obtaining the processing result of data contents of the financial transaction information in the financial transaction processing application file 112A delivered from the financial transaction processing application 110A by the "financial transaction information data transfer processing" described later, the payment processing part 530 executes the normal payment processing (confirmation of the effective valid state of the availability status information, financial payment processing, etc.).

It is to be noted that the superiority of the invalidation setting of an account based on the credit information by the financial institution side against the processing result of the financial transaction processing application 110A, the same as mentioned above, can be applied.

Next, the configuration of the financial transaction control system 100A is described in detail.

The financial transaction control system 100A includes a financial transaction processing application 110A and a secret code authentication part 120A.

First, the secret code authentication part 120A will be described.

The financial transaction control system 100A includes the secret code authentication part 120A, and the user terminal 200A includes the secret code input part 230, so the secret code authentication part 120A verifies the secret code input and transmitted via the secret code input part 230 by the user matching with the secret code registered on the payment management system 500A, and the financial transaction processing application 110A executes the prescribed processing on the condition that the authentication processing is successful.

In this Embodiment 1, the transmission of the "approval information" is required in addition to the transmission of the "financial transaction processing request information" from the user application 210A. The "financial transaction processing request information" is requested for the open processing of the financial transaction processing application file, and the "approval information" is requested for the closing processing of the financial transaction processing application file.

The secret code authentication part 120A extracts a secret code included in the request information and the approval information of the financial transaction processing transmitted from the user terminal 200A, accesses the true secret code data registered in advance on the payment management system 500A by the true user, and authenticates the user by checking whether or not the secret code is correct.

Next, the financial transaction processing application 110A is described.

The financial transaction processing application 110A is an application which can be installed in the financial transaction control system 100A or can be utilized as the ASP. The financial transaction processing application 110A may always be activated or may be started up on the basis of the request information of the financial transaction processing transmitted from the user terminal 200A. In this example, it is always activated.

The financial transaction processing application 110A is configured to include the financial transaction processing application file 112A prepared for each user or every financial transaction.

The financial transaction processing application 110A can perform the "open processing" for opening the financial transaction processing application file 112A on demand at the time of using a credit use or debit use, the "data transfer processing" for delivering the data in the financial transaction processing application file 112A to the payment processing part 530, and the "closing process" of the financial transaction processing application file 112A.

The financial transaction processing application file 112A is an application file prepared for each user or every financial transaction processed by the financial transaction processing application 110A. The financial transaction processing application 110A executes the following processing using the financial transaction processing application file 112A.

The processing are (1) "open processing" for opening the financial transaction processing application file 112A on demand for each user or every financial transaction; (2) "editing processing" for editing data of the financial transaction processing application file 112A; (3) "transaction processing and reception processing of "approval confirmation" by the user; (4) transfer processing to the payment management system 500A for financial transaction processing; and (5) closing processing of the financial transaction processing application file 112A.

(1) The open processing of the financial transaction processing application file 112A.

First, the open processing of the financial transaction processing application file 112A is described. The "open processing of the financial transaction processing application file 112A" is executed on demand in response to the start of the financial transaction processing. In this example, if there is a request such as the start of credit use or debit use by the user from the user application 210A, the financial transaction processing application 110A executes the open processing for opening and starting the financial transaction processing application file 112A corresponding to the account of the user.

(2) The data editing processing of the financial transaction processing application file 112A.

The financial transaction processing application file 112A is managed by each user ID, and it becomes able to edit for writing financial transaction data when it is opened. When the financial transaction information generated by the financial transaction information generation part 420 of the store terminal / EC site 400 is transmitted to the payment management system 500A, the payment processing part 530 transfers the financial transaction information to the financial transaction processing application 110A. The financial transaction processing application 110A temporarily accepts editing of the financial transaction information data written by a third party (in this example, the store terminal / EC site 400) to the financial transaction processing application file 112A corresponding to the user ID information.

(3) Approval processing and confirmation processing by the user.

As an approval processing to the user, the "approval request" for asking whether or not approving acceptance of the financial transaction and normally closing the financial transaction is transmitted to the user terminal 200A, and the approval confirmation processing for waiting for a reply of the approval information from the user terminal 200A is performed.

It is assumed that the request for inputting "close secret code" is included in the "approval request". That is, the close secret code for closing processing for normally closing the financial transaction processing application file 112A is set to guide for inputting in the "approval request", and the user is guided to input the close secret code for closing.

In this example, the biometric information of the user is registered as an approval "closed secret code".

Next, "approval processing" for confirming "approval information" by receiving a reply of "approval information" from the user terminal 200a is performed.

Because the "close secret code" inputted by the user is included in the approval information, the "close secret code" included in the approval information is extracted and authenticated via the secret code authentication part 120A. In this example, the biometric information of the user is the close secret code.

Thus, the close secret code for closing is set in the approval information and after authentication of the close secret code, and editing for the financial transaction processing application file 112A is fixed and normally closed. Higher security level is provided

(4) Transfer processing to payment management system 500A of the financial transaction processing.

The financial transaction processing application 110A transfers data contents of the financial transaction information recorded in the financial transaction processing application file 112A to the payment management system 530 in the "financial transaction information data delivery processing".

The payment management system 530 receives the financial transaction information, and thereafter performs the normal payment processing (confirmation of the effective valid state of the availability status information, financial payment processing, etc.).

(5) The closing processing of the financial transaction processing application file 112A.

Finally, the financial transaction processing application 110 performs the "closing processing" for closing the financial transaction processing application file 112A.

In this case, when the closing secret code included in the "approval information" transmitted from the user is authenticated, the flows of processing from (3) "the approval confirmation processing" to the user to (5) "the closing processing" of the financial transaction processing application file 112A are performed consecutively, so the operations until the closing processing of the financial transaction processing application file 112A are completed.

Next, the outline of the flow of processing of the financial transaction control system 100 according to Embodiment 1 is shown with reference to the flowchart and the drawings.

The user medium 300 is an IC card type credit card 300. To describe a scene in which a user purchases a product at a store and performs financial transaction payment by credit use. The user can also be considered as a scene in which the user logs in an EC site and purchases a product and performs financial transaction payment by credit use or debit use.

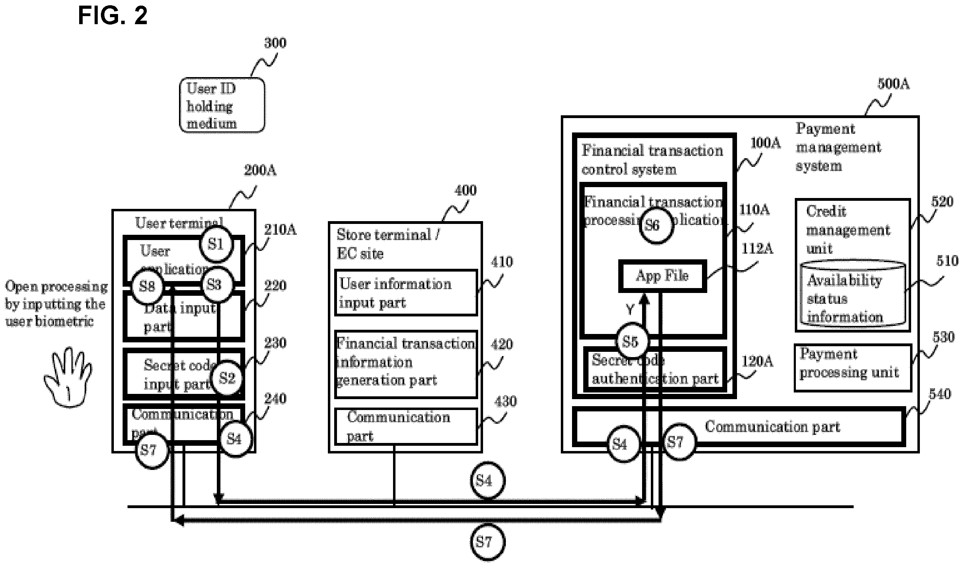

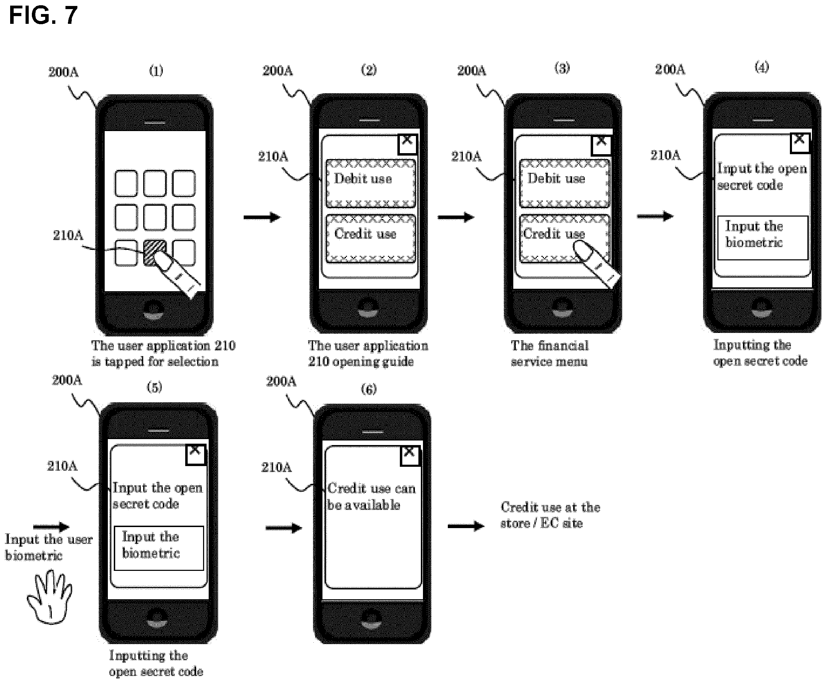

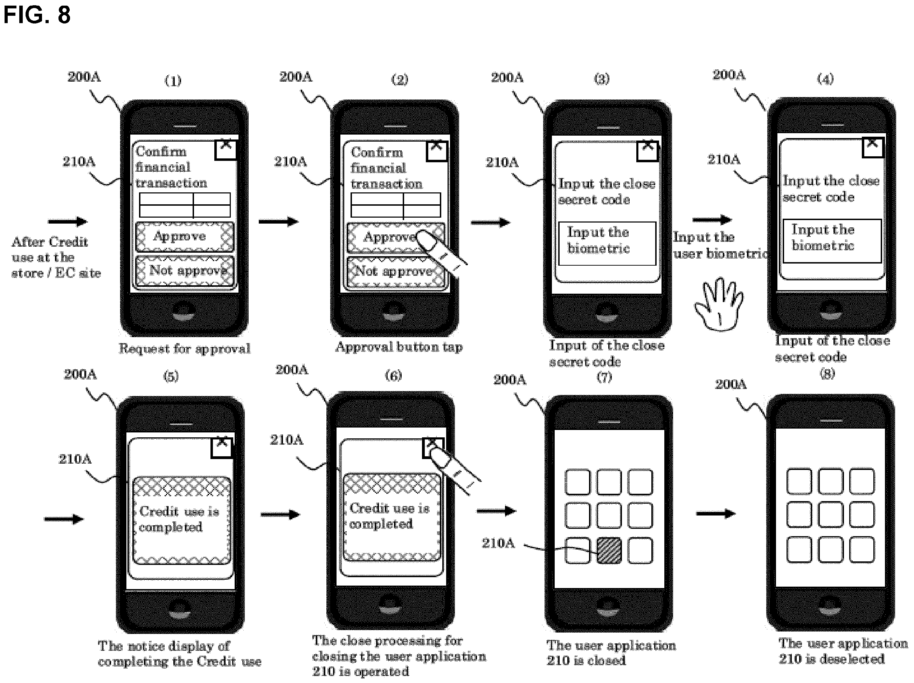

A flow of a series of procedures for credit use and debit use are described below with reference to system block drawing of Fig.2 to Fig.5, and an example of an operation display screen on the user terminal 200a of the financial transaction control system 100A is shown by FIG.7 and FIG.8.

First, the user selects a commodity and starts up the user application 210A by operating the smart phone 200A prior to payment of credit use (Step S1 in FIG.2). For example, an icon of the user application 210A displayed on the display of the user terminal 200Ais tapped (Fig.7 (1)). In this stage, a password input is guided to confirm the use authority of the user application 210A on the user terminal 200A, and service menus are shown (Fig.7 (2)). In this example, two menus "using credit" and "using debit" are displayed.

The user application 210A displays a guidance for requesting the input of the open secret code to the user (Fig.7 (4)) by pressing the credit use start button (Fig.7 (3)), and obtains the "open secret code" input from the user via the secret code input part 230 (Step S2 of Fig.2). In this example, fingerprint information is input as the biometric information (Fig.7 (5)).

The user application 210A generates "financial transaction processing request information" (Step S3 of Fig.2), and the user application 210A transmits "financial transaction processing request information" with "open secret code" as fingerprint information to the financial transaction control system 100A via the communication part 240 (Step S4 of Fig.2). In this example, "financial transaction processing request information" is transmitted.

When receiving the transmitted "financial transaction utilization request information", the financial transaction control system 100A extracts the "open password code" from the information and inputs it to the secret code authentication part 120A to execute authentication processing of the open secret code (Step S5 in Fig.2). The secret code authentication part 120A performs authentication processing by confirming the matching of the "open secret code" transmitted from the user application 210A and the "open secret code" registered on a payment management system 500A. When the authentication processing is successful, the secret code authentication part 120A notifies the financial transaction processing application 110A of the success of authentication, and the financial transaction processing application 110A executes the open processing of the financial transaction processing application file 112A associated with the corresponding user ID information (Step S6 in Fig.2).

When the authentication processing fails (Step S5 of Fig.2: N, not shown in the figure), the secret code authentication part 120A notifies the financial transaction processing application 110A of the authentication failure, and the financial transaction processing application 110A stops the financial transaction processing.

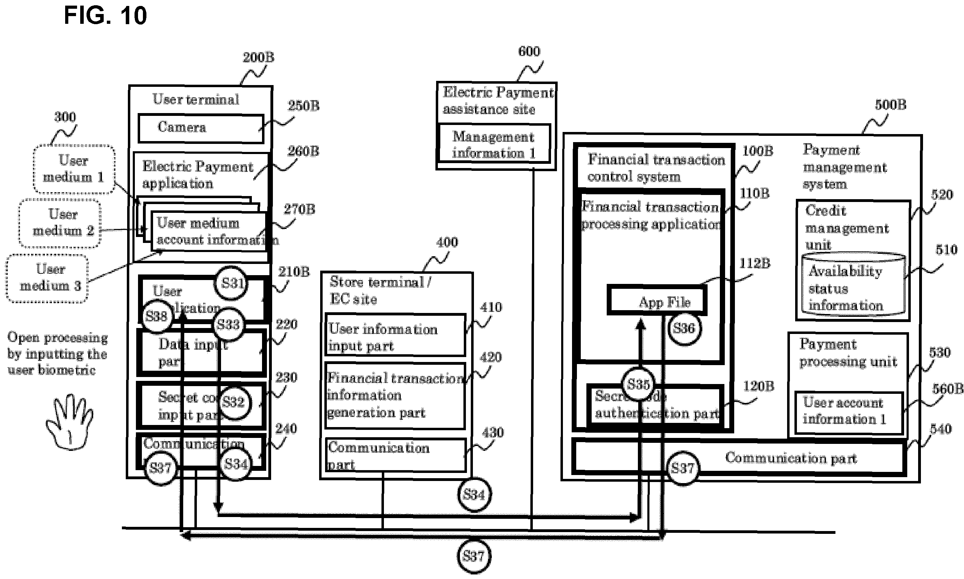

When the open processing of the financial transaction processing application file 112A is completed on the financial transaction control system 100A side, the information indicating "financial transaction use start OK" is generated (Step S6 in Fig. 10), and the information is returned to the user terminal 200A via the communication part 540 (Step S7 in Fig.2). The user terminal 200A displays the message indicating "financial transaction use starts OK" (Fig.7 (6)), and the credit use can be started (Step S8 in Fig.7).

Next, the scene of use at a store or an EC site is described.

As described above, the user can start credit use with the user terminal 200A after displaying "financial transaction use starts OK" on the user terminal 200A.

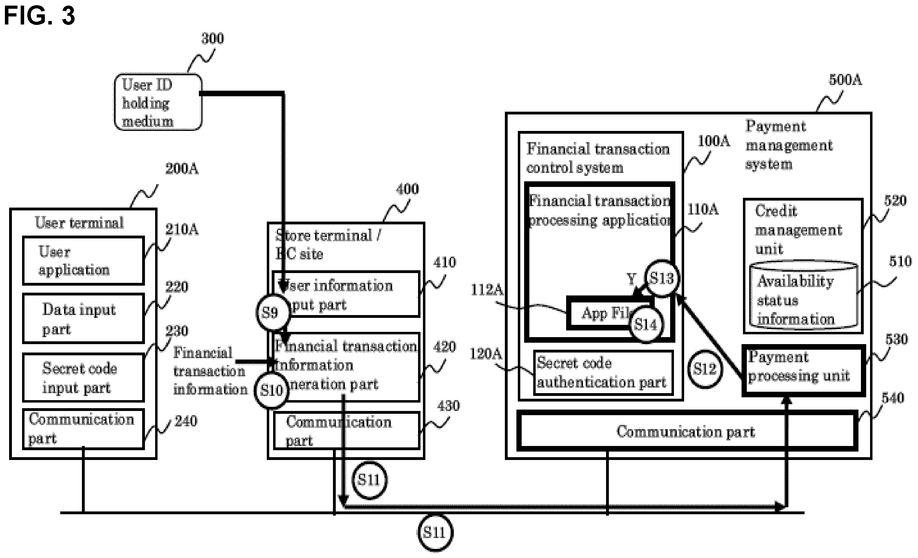

When the user purchases merchandise in a store 300, the user uses the credit card. The accounting staff uses the user information input part such as a magnetic stripe reader or an IC card reader according to the type of the card 410 to obtain necessary information from the credit card via the financial transaction information generation part 420 of a store terminal / EC site 400. The financial transaction information generation part 420 generates financial transaction information on the basis of the information (Step S10 of Fig.3) the generated financial transaction information is transmitted to the payment management system 500A via the communication part 430 of the store terminal / EC site 400 (Step S11 in Fig.3).

In the case of using the EC site, information such as the credit card number, the expiration date, and the identification number is inputted according to the display guidance for input for payment, the financial transaction information is generated by the EC site, and the financial transaction information is transmitted to the payment management system 500A via the communication part 430 of the store terminal / EC site 400.

In this Embodiment 1, the payment management system 500A does not perform normal credit processing in this moment. First, the payment processing part 530 passes the financial transaction information to the financial transaction processing application 110A(Step S12 of Fig.3).

As described later, the payment processing part 530 executes normal payment processing after receiving information indicating the completion of the approval processing from the financial transaction processing application 110A.

The financial transaction processing application 110A extracts the user ID information from the received financial transaction information and checks whether or not the user ID information is associated with the currently processed financial transaction processing application file 112A (Step S13 in Fig.3).

When the currently processed financial transaction processing application file 112A is associated with the user ID information (Step S13: Y in Fig.3), the user is regarded as the user of the financial transaction control system 100A. Therefore, the received financial transaction information is written in the corresponding financial transaction processing application file 112A (Step S14 in Fig.3).

Next, the processing advances to approval processing of the financial transaction processing application file 112A.

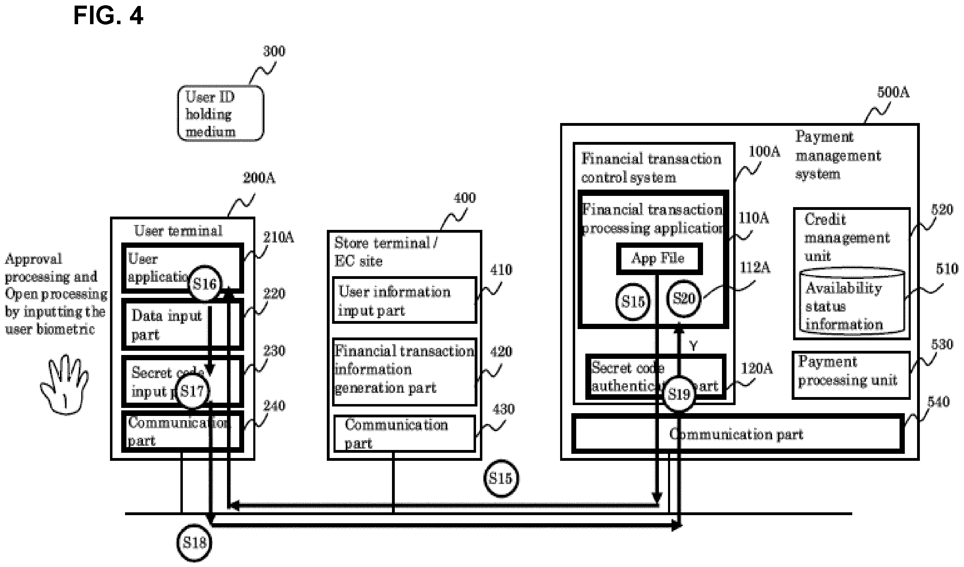

The financial transaction control system 100A executes "approval check processing". The financial transaction control system 100A transmits the "approval request" for asking whether or not an approval processing for approving a financial transaction to the user application 210A to normally end the financial transaction (Step S15 of Fig.4), and waits for a reply of "approval information" from the user application 210A corresponding to the "approval request".

The "approval check processing" may be such that the financial transaction control system 100A autonomously transmits to the user application 210A to wait for the input of the "approval information", or the user application 210A side may autonomously access the financial transaction control system 100A to input "approval information".

When the user terminal 200A receives the "approval request", the user terminal 200A displays a message of "please confirm a transaction content of your card", a commodity purchase price, a credit payment frequency, and the like on a display, and displays "approval button" to guide the user (Fig.8 (1)). In this example, both buttons "Approve" and "not Approve" are displayed on the screen.

When the user presses the "Approve" button (Step S16 of Fig.4, Fig.8 (2)), the user application 210A displays a guidance requesting input of the "close secret code" to the user (Fig.8 (3)), and obtains the "close secret code" input from the user via the secret code input part 230 (Step S17 of Fig.4). In this example, fingerprint information is input as biometric information (Fig.8 (4)).

The operation in the case where the "not Approve" button is pressed is not limited. For example, the user application 210A notifies the payment processing unit 530 of the effect of the payment processing is rejected by the user (for example, it is regarded as an unauthorized transaction by the unauthorized user), and forcibly ends the financial transaction processing.

The financial transaction control system 100A executes "approval confirmation processing" in response to a reply of "approval information" (Step S18 of Fig.4) from the user terminal 200A. In this example, the "close secret code" is included in the approval information, the "close secret code" is extracted and inputted to the secret code authentication part 120A. The authentication processing of the close secret code is executed (Step S19 in Fig.4).

The secret code authentication part 120A performs the authentication processing by matching the "close secret code" transmitted from the user application 210A with the "close secret code" registered on the payment management system 500A.

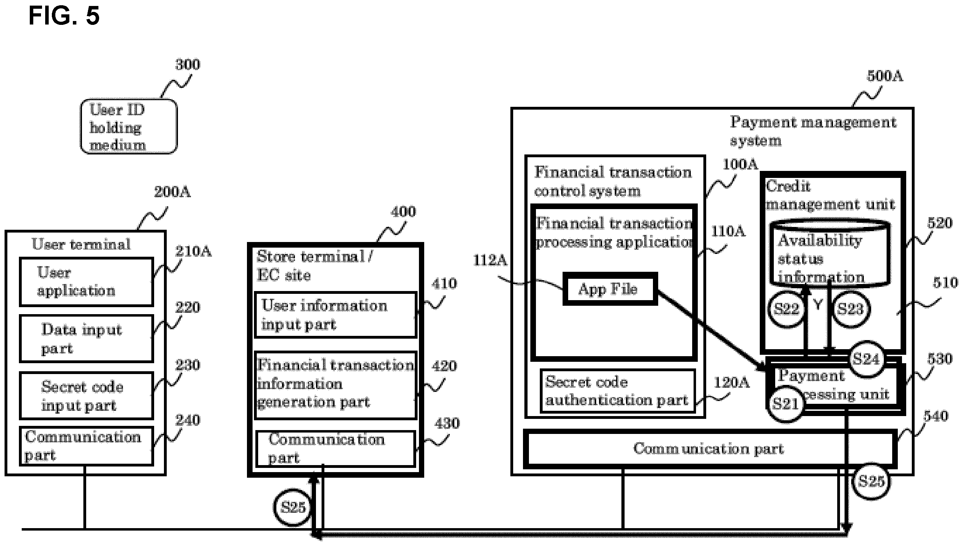

When the authentication processing is successful (Step s19: Y in Fig.4), the financial transaction processing application 110A notifies the financial transaction processing application 110A of the success of the authentication (Step S20 in Fig.4). The financial transaction processing application 110A transmits the data content of the financial transaction information to the payment management system 530A together with the information indicating that the payment processing is authenticated (Step S21 in Fig.5).

When the authentication processing fails (not shown in the figure), the financial transaction processing application 110A notifies the financial transaction processing application 110A of the authentication failure. The financial transaction processing application 110A transmits the information to the effect of payment processing is not authenticated to the payment management system 530 (not shown in the figure).

On the condition that the approval information is confirmed in the approval confirmation processing and the input close secret code for closing processing is confirmed as correct one, the financial transaction processing application 110A passes the data contents of the financial transaction information of the financial transaction processing application file 112A to the payment management system 530 together with information indicating that the payment processing is authenticated (Step S21 in Fig.5).

The payment management system 530 receives the transmit of the financial transaction information, and thereafter starts normal payment processing.

The credit management unit 520 checks the availability status information 510 on the basis of the credit is whether or not in the effective valid state, that is "not in the invalid state" (Step S22 in Fig.5)). If the availability status information 510 is "not in the invalid state", the credit management unit 520 notifies the payment management system 530 that the availability status information 510 and the credit information is effective valid state (Step S23 in Fig.5). The payment management system 530 extracts various information necessary for credit use such as the user ID information and the payment price information from the financial transaction information and executes the credit payment processing (Step S24 in Fig.5). The information indicating that the credit use is established is returned to the store terminal / EC site 400 (Step S25 in Fig.5).

If the setting of the availability status information 510 by the credit management unit 520 based on the credit information indicates "invalid state" (not shown in the figure), the financial transaction processing application 110A transmits the information indicating the payment processing is not authenticated to the payment management system 530 regardless of the approval processing transmitted from the user terminal 200A. Thus, the credit processing is not established. The information indicating that the credit use is not established is returned from the payment processing unit 530 to the shop terminal / EC site 400 (not shown in the figure).

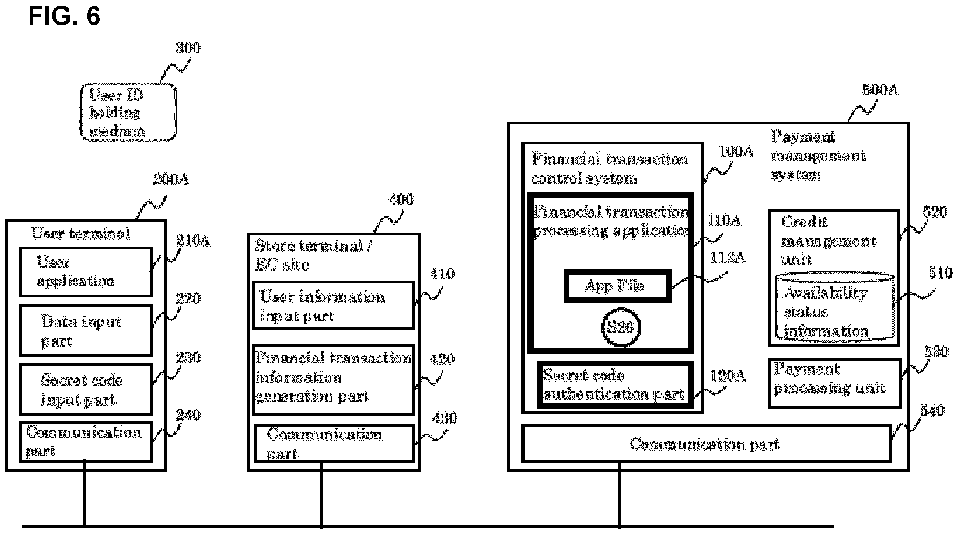

The financial transaction processing application 110A executes "close processing" for the financial transaction processing application file 112A. The financial transaction processing application file 112a is closed (Step S26 in Fig.6).

The user application 210A displays that the credit processing is completed (Fig.8 (5)), and if necessary, terminates the user application 210A (Fig.8 (6)), and closes the user application 210A (Fig.8 (7)). Further, icon selection of the user application 210A is released (Fig.8 (8)).

In step S13, if the currently processed financial transaction processing application file 112A is not associated with the user ID information (not shown in the figure), the user of the financial transaction control system 100A is not the true user (that is, the user is other person, not the authenticated user). The payment processing part 530 returns the information of the payment processing is not authenticated, and the payment processing part 530A stops the payment processing.

### Embodiment 2

An example of Embodiment 2 is shown, in which the user ID holding medium 300 is not required, and electronic credit financial transaction processing and electronic debit financial transaction processing in which the user ID information necessary for financial transaction processing and the like are computerized in the smart phone 200.

In the following description, as an example, the financial transaction control system 100B of the electronic payment applying to the electronic payment application 260B and user account information 270B installed in the user terminal 200B and the user account information 560B of the payment processing unit 530 is described. These electronic payment application 260B and user account information 270B installed in the user terminal 200B and the user account information 560B of the payment processing unit 530 are not limited. The user application 210B of the user terminal 200b and the financial transaction processing application 110B of the financial transaction control system 100B and the financial transaction processing application file 112B are provided for preventing unauthorized use.

The configuration of the financial transaction control system 100B of Embodiment 2 comprises at least the financial transaction processing application 110b and the secret code authentication part 120B. These are the same as those of the configuration shown in Fig.1 shown in Embodiment 1, and the same description thereof is omitted here.

The user terminal 200B according to Embodiment 2 includes at least the user application 210B, the data input part 220, the secret code input part 230, the communication part 240, in addition, a camera 250B, an electronic payment application 260B, and the user account information 270B.

The user application 210B exchanges financial transaction data with the financial transaction control system 100B in the same manner as in Embodiment 1, and has the function of (1) Open processing of the financial transaction processing application file 112B and (3) Approving request processing and Approval confirmation processing to the user.

The data input part 220, the secret code input part 230, and the communication part 240 are the same as those shown in Embodiment 1, so the detailed description thereof is omitted.

The electronic payment application 260B is an application used for electronic credit payment or electronic debit payment. The application may be used for various electronic payment provided by the financial institution or the like via the user terminal 200B. In recent years, similar electronic payment applications are provided, but in the present invention, the electronic payment application 260B can include such applications that are becoming popular. For example, various devices such as Apple pay (TM), Amazon payload (TM), and the like have begun to be provided.

The user account information 270B is account information of the user in the credit service used in electronic payment application 260B. The information name may be different in an electronic payment application 260B to be used. The information required for the credit service is held as electronic information in the electronic payment application 260B. Conventionally, such information is held in the conventional credit card medium.

The camera 250B may be a camera equipped with the user terminal such as the smart phone. For example, by photographing and image recognition of the credit card by the camera 250B, the held user ID information can be used when the user ID information is registered as user account information 270B in the electronic payment application 260B. The security code or the like may be manually input.

According to the used electronic payment application 260B, the registration procedure of the user account information 270B and the method of personal authentication required for registration can be different. However, in the present invention, not limited to the registration and use procedure of the electronic payment application 260B and the user account information 270B. The various electronic payment applications 260B and user account information 270B are registered normally hereinafter.

Next, the payment management system 500B according to Embodiment 2 is described below.

The payment management system 500B is a system managed by the financial institution, a credit company, etc. In the same manner as in Embodiment 1, the payment management system 500B can exchange financial transaction data with the financial transaction control system 100B and can perform data communication with the store terminal / EC site 400 and the user terminal 200B on the network. In this example, the financial transaction control system 100B is included in the payment management system 500B, but it is needless to say that the financial transaction control system 100B can be installed in another computer resource.

The payment management system 500B comprises the availability status information 510, the credit management unit 520, the payment processing unit 530, and the communication part 540, the same as in Embodiment 1. In addition, the user account information 560B is provided in this Embodiment 2.

The user account information 560B corresponds to the user account information 270B registered on the user terminal 200B, and is account information of the user in the credit service used in data exchange between the electronic payment application 260B and the payment processing unit 530. The electronic credit processing or the electronic debit processing and the like is carried out by interlocking the user account information 560B with the user account information 270B.

Next, the flow of processing of the financial transaction control system 100B according to Embodiment 2 is shown with reference to the flowchart and the drawings. Detailed description of a part similar to the flow of processing of the financial transaction control system 100A shown in Embodiment 1 is omitted here.

The flow shown in Fig.10 may be the same as that shown in Fig.2 of Embodiment 1. That is, open processing (Step S31 in Fig.10) of the user application 210B prior to starting the payment of credit use, the input processing (Step S32 of Fig.10) of "open secret code" through the secret code input part 230, and the generation processing of "financial transaction processing request information" using the user application 210B (Step S33 in Fig.10), the transmission processing (Step S34 of Fig.10) to the financial transaction control system 100B of the "financial transaction processing request information" and "open secret code" by the secret code authentication part 120B (step s35 of Fig.10), the open processing (Step S36 of Fig.10) of the financial transaction processing application file 112B by the user application 210B, the reply processing to the user terminal 200B indicating completion of the financial transaction processing (Step S37 in Fig.10), and the display processing of the credit use start OK (Step S38 in Fig.10) may be the same as the steps S1 to S8 in Fig.2 of the Embodiment 1.

Next, the scene of use at a store or an EC site is described.

In this Embodiment 2, the electronic payment application 260B installed in the user terminal 200B is used.

As described above, the user can start credit use with the user terminal 200A after displaying "financial transaction use starts OK" on the user terminal 200A.

The user uses an electronic payment application 260B to start financial transaction processing such as merchandise purchase through electronic credit use at the shop or the EC site. The basic procedure for the electronic credit use is performed according to the basic procedure of the electronic payment application 260B to be used.

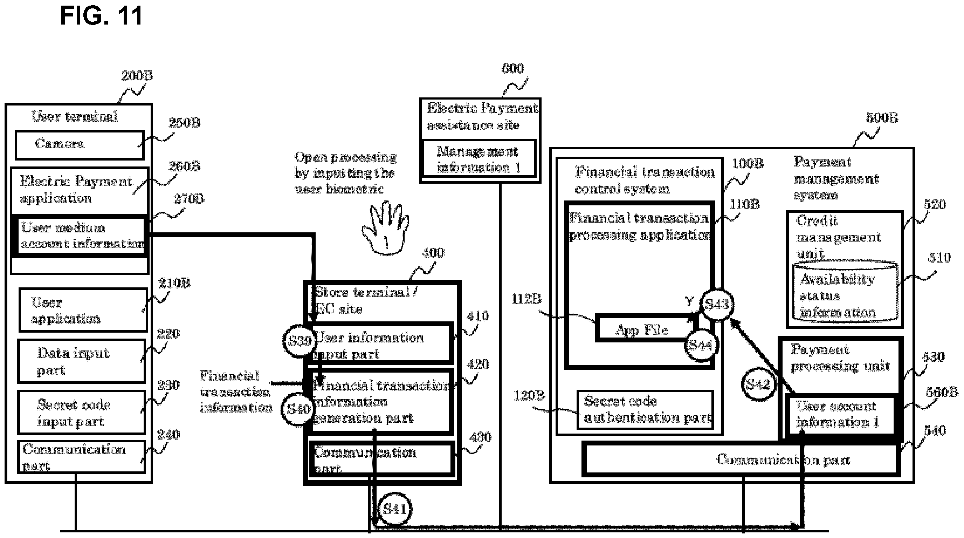

In this case, user account information 270B is obtained from the electronic payment application 260B according to the mechanism of electronic payment at the store or the EC site (Step S39 of Fig.11). In this case, the user account information 270B is obtained through the user information input part 410.

Next, various information necessary for credit use and payment price information are inputted via the financial transaction information generation part 420 of at the store terminal / EC site 400. The financial transaction information is generated based on the information (Step S40 of Fig.11), and generated financial transaction information is transmitted to the payment management system 500B via the communication part 430 of the store terminal / EC site 400 (Step S41 of Fig.11).

The financial transaction information is transmitted to the user account information 560B of the payment processing part 530, and it is determined whether or not the user account information 270B and the user account information 560B are matched with each other. If it is not confirmed, the electronic payment cannot be performed. In this example, it is assumed that it is confirmed.

In this stage, the payment management system 500B still does not perform normal credit processing yet. The payment processing part 530 transmits the financial transaction information to the financial transaction processing application 110B (Step S42 of Fig.11).

The financial transaction processing application 110B extracts the user ID information from the received financial transaction information and checks whether or not the user ID information is associated with the currently processed financial transaction processing application file 112B (Step S43 in Fig.11).

When the processed financial transaction processing application file 112B corresponds to the user ID information (Step S43: Y in Fig.11), the user of the financial transaction control system 100B is the true user, and the received financial transaction information is written in the corresponding financial transaction processing application file 112B (Step S44 of Fig.11).

Next, the processing advances to the approval processing of the financial transaction processing application file 112B.

The financial transaction control system 100B executes the "approval request processing" and "approval processing".

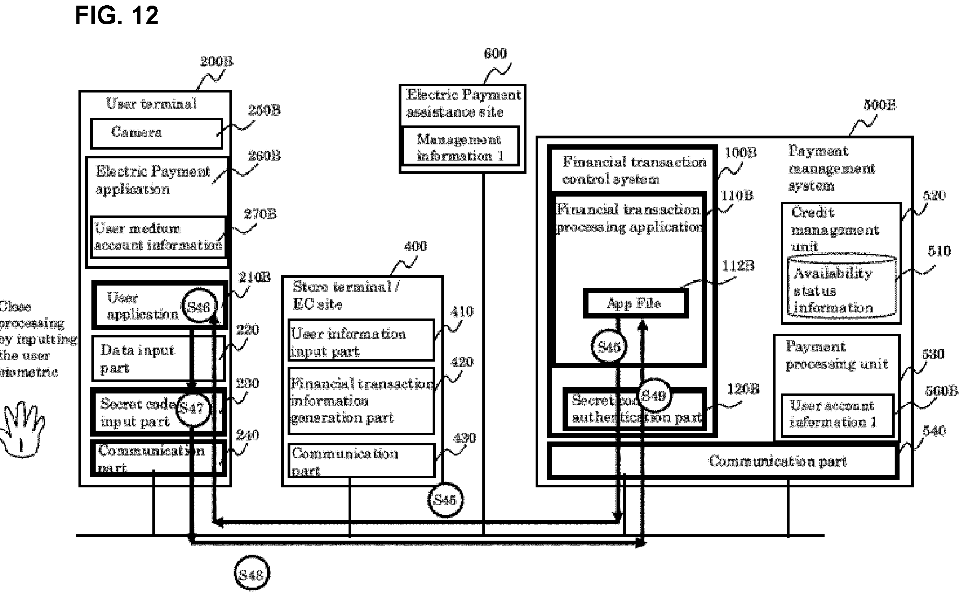

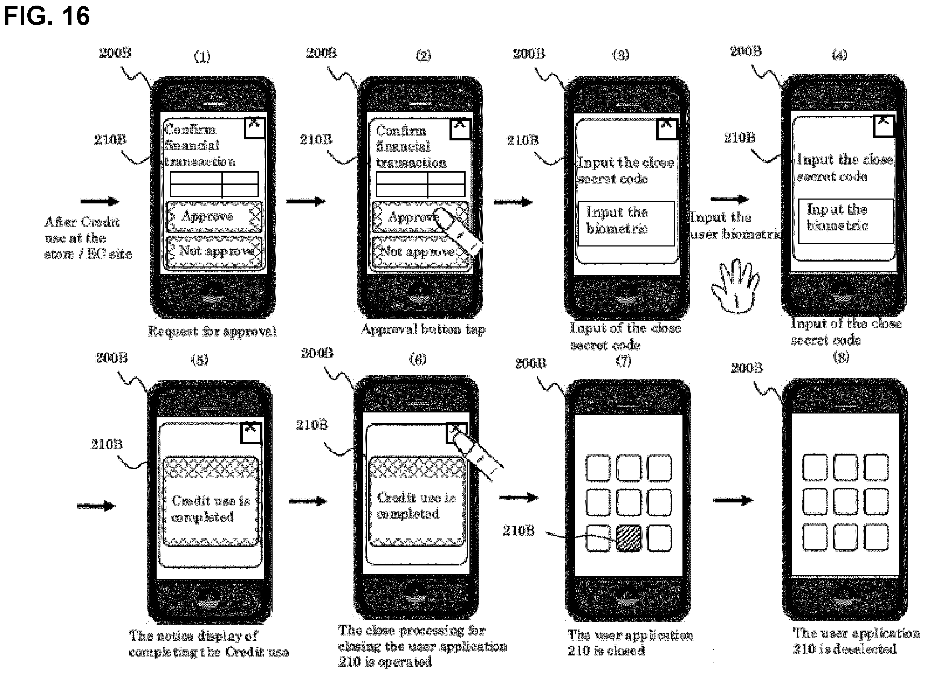

The following processing, the transmission of the "approval request" (Step S45 of Fig.12)), the displaying of the "Approve button" (Steps S46 and Fig.16 (1) (2)), the input processing of the close secret code by the user (Step S47, Fig.16 (3) (4)), the reply processing of "approval information" from the user terminal 200B (Step S48 in Fig.12), and the authentication processing with the close secret code in the financial transaction control system 100B (Step S49 of Fig.12), are the same as in steps S45 to S49 shown in Fig.4 of Embodiment 1.

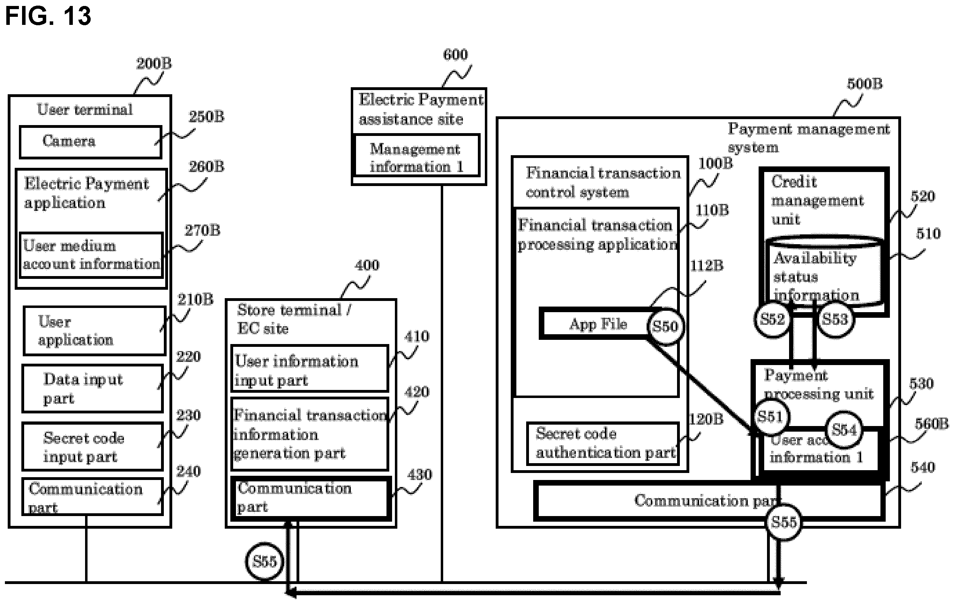

When the "approval information" is normally processed in the approval confirmation processing, that is, the input close secret code for closing processing is correct one, the financial transaction processing application 110B transfers the data contents of the financial transaction information in the financial transaction processing application file 112B to the payment management system 530 together with the information indicating that the payment processing is authenticated (Step S50 of Fig.13).

In this example, as shown in Fig.16 (1), both buttons "Approve" and "Not approve" are displayed on the screen. The operation in the case that the "not Approve" button is pressed is not limited. For example, the user application 210B notifies the payment processing part 530B of the fact that the financial transaction is not an authenticated transaction by the user (for example, as the unauthorized transaction by the unauthorized user), and the payment processing part 530B forcibly ends the financial transaction processing.

The user account information 560B of the payment processing part 530B receives the transmission of the financial transaction information, and thereafter starts the prescribed payment processing.

The confirmation processing with the availability status information 510 of the credit management part 520 is performed (Step S52 and Step S53 of Fig.13). The credit payment processing based on the financial transaction information by the payment processing part 530B is executed (Step S54 of Fig.13), and the reply of the information indicating that the credit use is established is executed in the store terminal / EC site 400 (Step S55 of Fig.13).

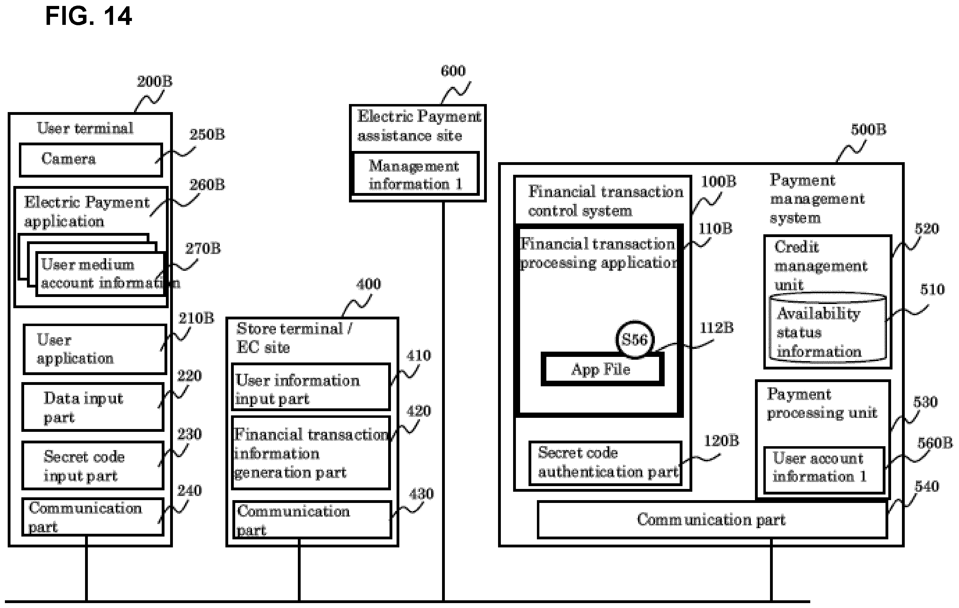

Finally, the financial transaction processing application 110B executes the "close processing" for financial transaction processing application file 112B (Step S56 in Fig. 14).

The user application 210B displays that the credit processing is completed (Fig. 16 (5)), and if necessary, terminates the user application 210B (Fig.16 (6)), and closes the user application 210B (Fig.16 (7)). Further, icon selection of the user application 210B is released (Fig.16 (8)).

As described above, even in the system configuration using electronic credit use and electronic debit use without using a card medium, the financial transaction control system 100B of Embodiment 2 can be applied to the authentication process using the open secret code for opening processing and the close secret code for closing process with the financial transaction processing application 110B, the financial transaction processing application file 112B and the secret code authentication part 120B. A high security level can be acquired in the present invention. In the prior art, there is no electronic payment system for requesting the input of secret code for two times in the process of opening the application file and closing the application file for each user to ensure reliable high security processing.

In step S43, if the currently processed financial transaction processing application file 112B is not associated with the user ID information (not shown in the figure), the user of the financial transaction control system 100B is not the true user (that is, the user is other person, not the authenticated user). The payment processing part 530 returns the information of the payment processing is not authenticated, and the payment processing part 530B stops the payment processing.

### Embodiment 3

An example of Embodiment 3 is shown, in which the availability status information and the availability status information state control part are provided, and a security level is improved by performing invalid default processing at normal time. It is shown as so-called electronic credit financial transaction process or an electronic debit financial transaction process in which the user ID holding medium 300 is not required in the same manner as in Embodiment 2.

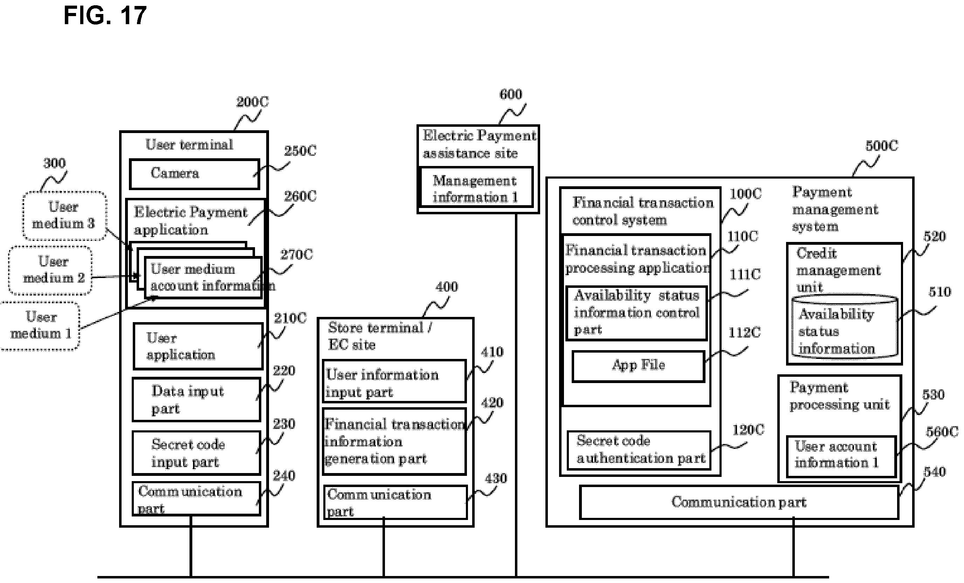

FIG.17 is the drawing showing a configuration example of the financial transaction control system 100C according to the Embodiment 3. As shown in Fig.17, the financial transaction control system 100C according to this Embodiment 3 comprises at least the financial transaction processing application 110C and the secret code authentication part 120C.

In this Embodiment 3, the financial transaction processing application 110C includes the availability status information state control part 111C and the user application file 112C corresponding to each user or every financial transaction.

The availability status information state control part 111C switches the effective valid state and invalid state of the availability status information 510C managed by the payment management system 500C on the basis of the request of the financial transaction information that the financial transaction processing application 110C receives from the user application 210C of the user terminal 200C.

In this example, the availability status information 510C indicates the effective invalid state of the user account managed on the payment management system 500C, or the invalid state of the financial transaction acceptance for the user account.

The availability status information 510C is managed by the credit management part 520. When the availability status information 510C indicates an effective state, the payment management system 500C receives the financial transaction accompanied by the credit use or the debit use by the user. When the availability status information 510C indicates an invalid state, the payment management system 500C rejects the financial transaction accompanied by the credit use or the debit use by the user.

For the credit user or the debit user who has no problem in credit, the availability status information 510C is maintained in an effective valid state. In the present invention, the state control of the availability status information 510C is performed by the use availability status information state control part 111C of the financial transaction control system 100C.

The availability status information state control part 111C includes "invalid default processing" and "status information switching processing".

In the "invalid default processing", the availability status information state control part 111C sets the state of the availability status information 510C of the payment management system 500C to "invalid state" as default state (normal time state). The status of the availability status information 510C is controlled to "invalid state" by this "invalid default processing".

The "status information switching processing" is the processing for switching the state of the availability status information 510C on demand according to the received request information or the approval information in the financial transaction transmitted from the user application 210C of the user terminal 200C. The financial transaction processing application 110C can temporarily switch the state of the availability status information 510C from the invalid state, which is the default setting, to the effective valid state on demand by the "status information switching processing" of the availability status information state control part 111C. Also, it can temporarily switch the state from the effective valid state to an invalid state, which is a default setting, by "invalid default processing".

In the general configuration in the prior art, the availability status is basically in an effective state. When it is in an invalid state, it means that the credit use falls into some abnormal state or an accident state. For example, a credit card, a debit card, or the like is stolen or lost. It is assumed that request for stopping the credit use is issued from the user to the payment management center of the financial institution or the credit company to stop the credit use by the stolen or lost card. For other example, there is a possibility that the account withdrawal due to the past financial transaction accompanied by the credit use or the debit use by the user becomes impossible and user lost his trust in the financial entity.

However, in the present invention, the financial transaction control system 100C is equipped with the financial transaction processing application 110C and the availability status information state control part 111C which allows the availability status information 510C managed on the payment management system 500C to be switched between the user's financial transaction processing. The security level of the financial transaction by the present invention accompanied by the credit use or debit use is enhanced.

In the procedure of the conventional payment management system, the "effective valid state" is maintained at a normal time (default setting), and only when some kind of inconvenience occurs, the user asks the financial institute to switch the status to the "invalid state".

However, in the present invention, such conventional idea is not employed and is reversed, the availability status information state control part 111C performs "invalid default processing" for controlling the default setting of the availability status information 510C as an "invalid state". That is, the availability status information 510C is maintained in the "invalid state" by the availability status information state control part 111C during in the normal time (default setting). Thus, even if the third person tries unauthorized use while the user does not notice, the credit use and the debit use cannot be performed, and the high security can be maintained.

The financial transaction processing application 110C receives a request for the financial transaction processing from the user application 210C at the start of the financial transaction processing, and temporarily switches the availability status information 510C to the effective valid state in response to the financial transaction processing. After finishing the financial transaction processing, the financial transaction processing application 110C automatically returns the availability status information 510C to the invalid state (default state).

Next, the superiority of the invalidation setting by the payment management system side based on the credit information of the user is described below.

As described above, the availability status information state control part 111C can switch the availability status information state of the payment management system 500C, but it is preferable that the switching control is prohibited when the invalidation of the user account is set by the payment management system side based on the credit information of the user. The invalidation of the user account set by the payment management system side is a so-called forced action by the payment management system side for preventing the establishment of the financial transactions on the basis of a status in which the user's own payment capability lack is found or a status in which a transaction exceeds the credit frame of the payment given to the user. It is apparently an inappropriate situation to allow the user of the switching control of the availability status information freely.

Therefore, the payment management system 500C executes control in principle in which the invalidation setting of the availability status information 510C based on credit is prioritized.

That is, when the setting of the availability status information 510C set on the basis of the credit information managed by the credit management part 520 of the payment management system 500C indicates the "effective valid state", the switching control of the availability status information 510C by the availability status information state control part 111C is possible and the switching of the availability status information 510C is accepted. When the setting of the availability status information 510C indicates "invalid state", the payment management system 500C keeps the "invalid setting" and the switching control (that is, switching processing to the effective state) by the availability status information 510C by the availability status information state control part 111C is not accepted, and maintains the "invalid state" of the availability status information 510C as it is.

Next, the financial transaction processing application file 112C is described.

The financial transaction processing application file 112C is an application file prepared for each user or every financial transaction processed by the financial transaction processing application 110C. The financial transaction processing application 110C executes the following processing using the financial transaction processing application file 112C.

(11) "Open processing" for opening the financial transaction processing application file 112C for each user or every financial transaction, (12) "Editing processing" for editing the data of the financial transaction processing application file 112C, (13) "Approval confirmation processing and reception processing" for requesting approval confirmation of the financial transaction for the user, (14) "Switching processing" for switching the availability status information 510C to the effective valid state temporary, (15) "Transmitting processing" for transmitting the financial transaction processing to the payment management system 500C, (16) "Switching processing" for switching the availability status information 510C to invalid state, and (17) "Closing processing" of the financial transaction processing application file 112C.

(11) "Open processing" for opening the financial transaction processing application file 112C.

The open processing of the financial transaction processing application file 112C is the same as that of the financial transaction processing application file 112A shown in Embodiment, so it is omitted here.

(12) "Editing processing" for editing the data of the financial transaction processing application file 112C.

The data editing processing of the financial transaction processing application file 112C is the same as that of the data editing processing of the financial transaction processing application file 112A shown in Embodiment 1, so it is omitted here.

(13) "Approval confirmation processing and reception processing" for the user.

The approval confirmation processing and the reception processing to the user are the same as those of the approval confirmation processing and the reception processing for the user shown in Embodiment 1, so these are omitted here.

(14) "Switching processing" for switching the availability status information 510C to the effective valid state temporary.

On the condition that "approval information" is confirmed in the approval confirmation processing, that is, when the close secret code for closing processing is authenticated, the financial transaction processing application 110C causes the availability status information state control part 111C to execute "switching processing" for switching the availability status information 510C from the default invalid state to the temporary effective valid state.

(15) "Transmitting processing" for transmitting the financial transaction processing to the payment management system 500C

The financial transaction processing application 110C transmits the data contents of the financial transaction information recorded in the financial transaction processing application file 112C to the payment management system 530 as "transmitting processing" for transmitting the financial transaction information data.

The payment management system 530 receives the payment of the financial transaction information, and thereafter performs normal payment processing (confirmation of the effective state of the availability status information, financial payment processing, and the like).

(16) "Switching processing" for switching the availability status information 510C to invalid state.

After executing transmitting processing to the payment management system 500C of the above-described financial transaction processing, the financial transaction processing application 110C performs "default invalid state switching processing" for switching back the availability status information 510C to the default invalid state by the availability status information state control part 110C via the availability status information state control part 111C.

(17) "Closing processing" of the financial transaction processing application file 112C.

Finally, the "close processing" for closing the financial transaction processing application file 112C by the financial transaction processing application 110C is executed.

In this case, when the close secret code included in the "approval information" transmitted from the user is authenticated in the approval confirmation processing to the user for the closing processing (13) to the financial transaction processing application file 112C, the continuous processing is performed at once. The operations are executed up to this "close processing" of the financial transaction processing application file.

Next, the outline of the flow of processing of the financial transaction control system 100C according to Embodiment 3 is shown with reference to the flowchart and the drawings. The detailed description similar to the outline of the flow of processing of the financial transaction control system 100A shown in Embodiment 1 and similar to the outline of the flow of processing of the financial transaction control system 100B shown in Embodiment 2 is omitted here.

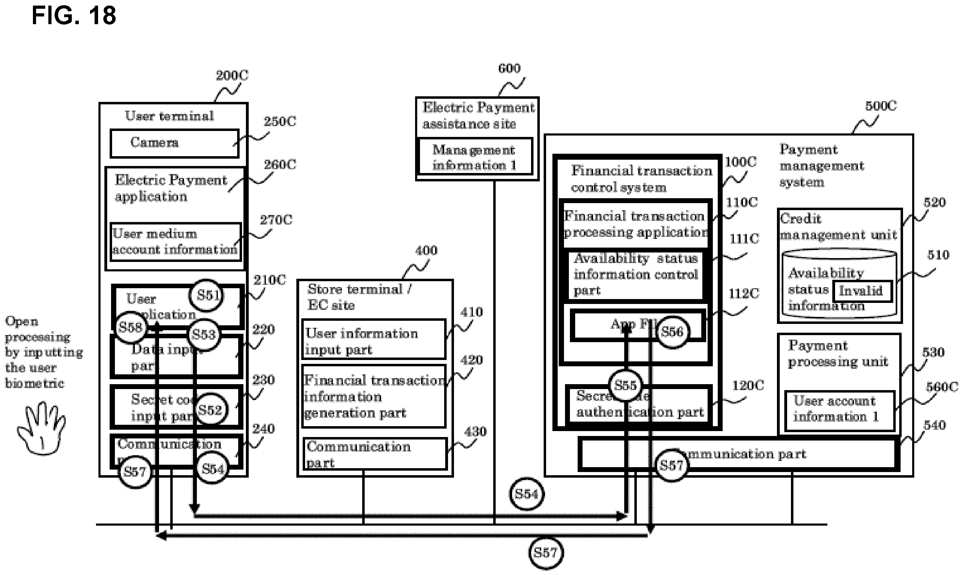

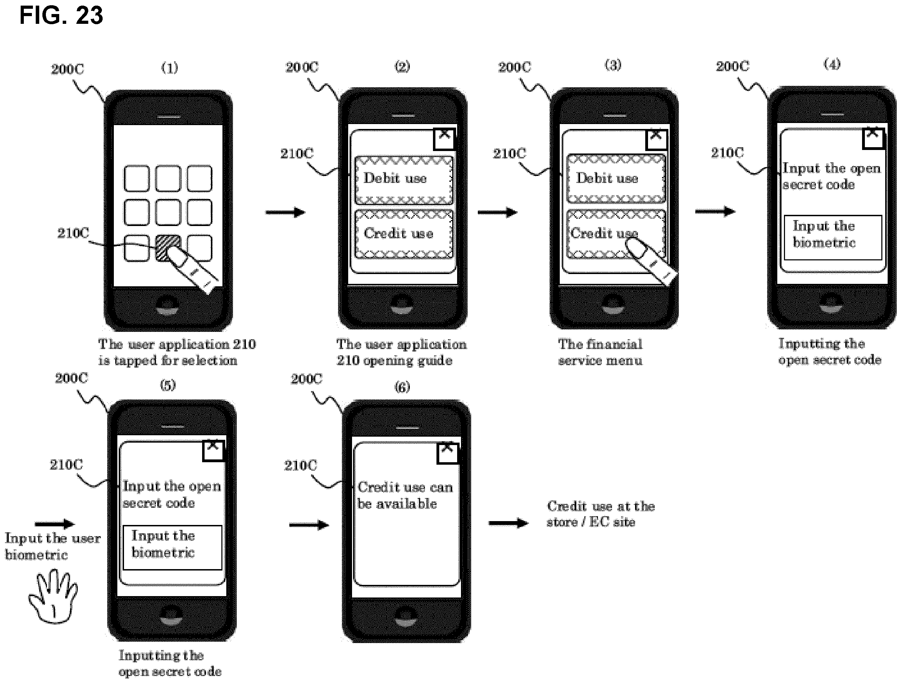

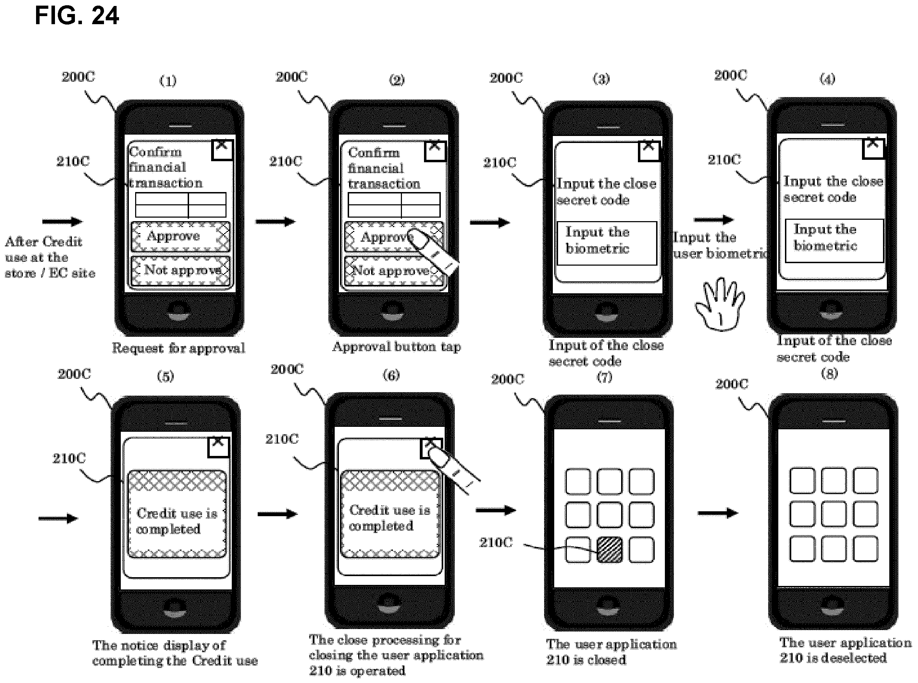

The flow of a series of credit use and debit use procedures is described with reference to Fig.18 to Fig.22. In addition, Fig.23 and Fig.24 are the drawings showing an example of the display screen on the user terminal 200C of the financial transaction control system 100C according to Embodiment 3. In these figures, the state of validity of the availability status information 510C and the state of switching of the invalid state are shown together.

The flow shown in FIG. 18 may be the same as that shown in FIG.2 of Embodiment. That is, the open processing of the user application 210C prior to the payment of credit use (Step S51 of Fig.18), the input process of "open secret code" via the secret code input part 230 (Step S52 in Fig.18), and the generation processing of "financial transaction processing request information" using the user application 210C (Step S53 in Fig.18), the transmission processing to the financial transaction control system 100C of "financial transaction processing request information" with "open secret code" (Step S54 in Fig.18), the authentication processing of the open secret code by the secret code authentication part 120C (Step S55 in Fig.18), the open processing of the financial transaction processing application file by the user application 210C (Step S56 in Fig.18), and the reply processing to the user terminal 200C indicating completion of the financial transaction processing (Step S57 in Fig.18), the display processing of the authentication of credit use (Step S58 in Fig.18) may be the same as the steps S1 to S8 in Fig.2 of Embodiment 1.

Next, the scene of use at a store or an EC site is described.

The user can start to use credit payment after pressing the credit use start button and the message "the credit use start" is displayed on the display.

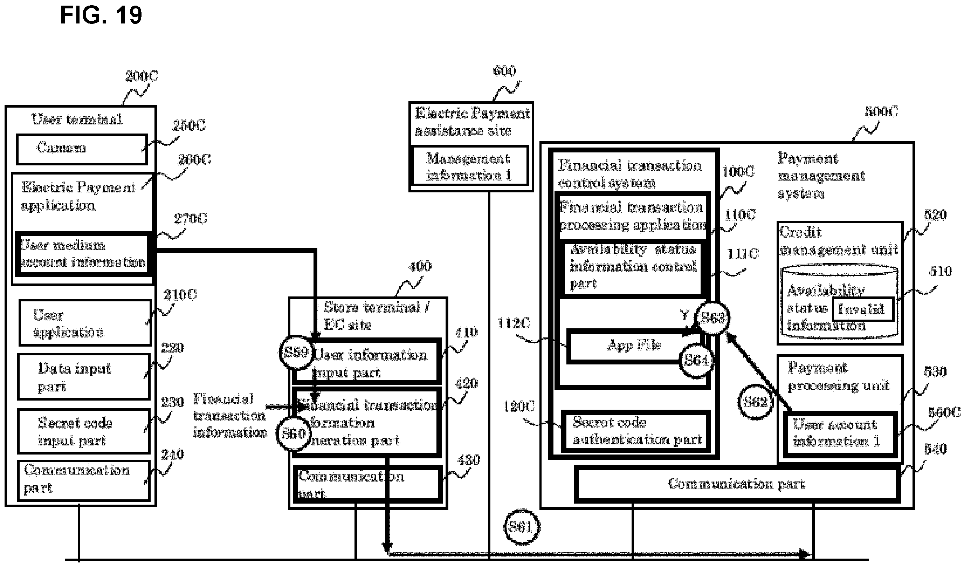

The flow shown in Fig.19 may be the same as that shown in Fig.11 of Embodiment 2. The obtaining process of the user account information 270C from the electronic payment application 260C (Step S59 in Fig.19), the generation process for generating the financial transaction information via the financial transaction information generation part 420 of the store terminal / EC site 400 (Step S60 of Fig.19), the transmission process for transmitting the financial transaction information to the payment management system 500C (Step S61 in Fig.19), the transmission processing for transmitting the financial transaction information from the payment processing unit 530C to the financial transaction processing application 110C (Step S62 in Fig.19), the check processing for checking whether or not there is user ID information associated with the financial transaction processing application file 112C (Step S63 of Fig.19), and the editing and writing processing (Step S64 in Fig.19) may be the same as the step S39 to the step S44 shown in Fig. 11 of Embodiment 2.

Next, the processing advances to approval processing of the financial transaction processing application file 112C.

The financial transaction control system 100C executes "approval check processing".

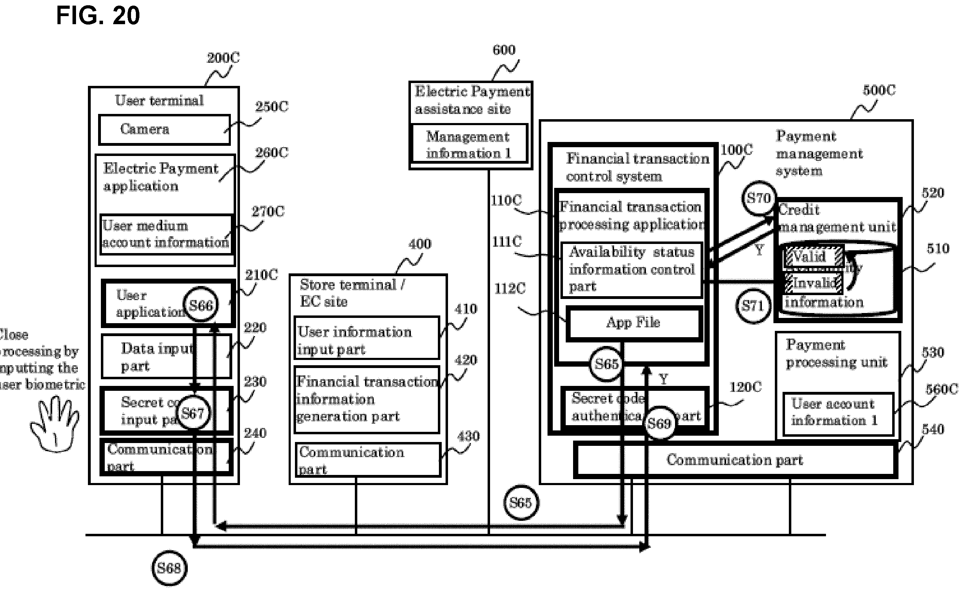

The "approval request" for asking whether or not the approval processing for approving the financial transaction to the user application 210C is sent, and waits for the reply of "approval information" from the user application 210C corresponding to the "approval request" (Step S66 in Fig.20).

The obtaining processing of "approval information" may be such that the financial transaction control system 100C autonomously transmits to the user application 210C and wait for input of "approval information", or the user application 210C may autonomously access the financial transaction control system 100C to guide for input of "approval information" from the user.

When the user terminal 200C receives the "approval request", the user terminal 200C displays a message "please confirm a transaction content" of the commodity purchase price, the credit payment frequency, and the like on the display, and displays the "approval button" to guide the user (Fig.24 (1)). In this example, the button "Approve" and the button "Not approved" are displayed.

When the user presses the "approve" button (Step S66, Fig.24 (2)), the user application 210C displays a guidance requesting input of the close secret code to the user (Fig.24 (3)), and obtains the close secret code input from the user via the secret code input part 230 (Step S67 in Fig.20). In this example, fingerprint information is input as biometric information (Fig.24 (4)).

The operation in the case where the "Not approved" button is pressed is not limited. For example, as in Embodiment 1, the user application 210 notifies the payment processing part 530C of the fact that the financial transaction is not approved as valid transaction by the user (for example, as the unauthorized transaction by the unauthorized user), and forcibly ends the financial transaction processing.

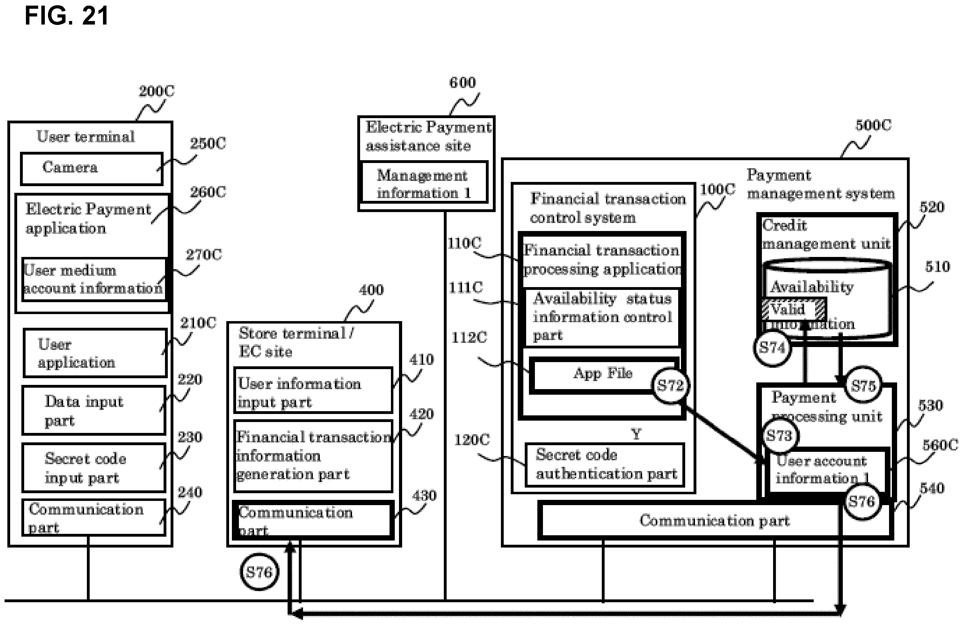

The access between the user terminal 200C and the financial transaction control system 100C may be maintained through the processing from the open processing of the financial transaction processing application file shown in Fig.18 through each processing shown in Fig.19 up to the closing processing of the financial transaction processing application file shown in Fig.20. That is, the access between the user application 210C and the financial transaction processing application 112C which have been established in the open processing of the financial transaction processing application file 112C by the user terminal 200C is maintained, after each processing shown in Fig.19, the closing processing of the financial transaction processing application file 112C described above has been started as shown in Fig.20 and Fig.21 when the user enters the "approval information" via the user terminal 200C by input of "approval information" and "close secret code".

The financial transaction control system 100C executes "approval confirmation processing" in response to the reply (Step S68 of Fig.20) of "approval information" from the user terminal 200C. In this example, "close secret code" is set in the approval information, the "close secret code" is extracted, the "close secret code" is inputted to the secret code authentication part 120C, and authentication processing of the close secret code is executed (Step S69 in Fig.20). The secret code authentication part 120C of the user application 210C processes the authentication with the "close secret code" registered on the payment management system 500C, if the authentication processing is successful (Step S69: Y), the secret code authentication part 120C notifies the financial transaction processing application 110C of the success of authentication. If the authentication processing fails (not shown in the figure), the secret code authentication part 120C notifies the financial transaction processing application 110C of the success of authentication. The availability status information state control part 111C passes the data contents of the financial transaction information to the payment management system 530 (not shown in the figure). Here, the availability status information 510C remains "default invalid state", so the payment management system 530 does not proceed credit processing, and thus, the credit processing is not established.

When the authentication succeeds, the financial transaction processing application 110C checks whether or not the setting of the availability status information 510C based on the credit management unit 520 is the "valid state" or "invalid state" (Step S70 in Fig.20). If the setting based on the credit information of the credit management part 520 is not the "invalid state", the payment management system 500C executes switching control of the availability status information 510C by the availability status information state control part 111C (Step S71 in Fig.20).

The switching control may be a program for directly switching the state of the availability status information 510C by the availability status information state control part 111C. The availability status information state control part 111C may request the credit management part 520 of the payment management system 500C to switch the state of the availability status information 510C, and the credit management part 520 may switch the availability status information 510C.

As a result of the step S70 of Fig.20, the state of the availability status information 510C is temporarily switched to the effective valid state.

The availability status information 510C based on the credit management unit of the credit information 520 is set to indicate "invalid state" (not shown in the figure), and the availability status information state control part 111C gives priority to "invalid state" setting by the credit management part 520 and maintains the "invalid state" of the availability status information 510C regardless of the approval processing transmitted from the user terminal 200C. The availability status information state control part 111C passes the data contents of the financial transaction information to the payment management system 530 (not shown). Here, the availability status information 510C is kept in the "invalid state", and the payment management system 530 cannot execute normal credit processing, so the credit processing is not established.

If the "approval information" is confirmed in the approval confirmation processing, that is, the input of the close secret code is used as the condition, the financial transaction processing application 110C transmits the data contents of the financial transaction information in the financial transaction processing application file 112C to the payment management system 530 together with information indicating that the payment processing is authenticated (Step S72 of Fig.21).

The payment management system 530 receives the transmission of the financial transaction information, and thereafter starts normal payment processing (confirmation of the effective state of the availability status information, the financial payment processing, etc.) (Step S73 in Fig.21).

The payment management system 530 extracts various information from the financial transaction information 510C necessary for credit use such as the user ID information when the state of the availability status information 510C is in the "effective valid state" (Step S75 of Fig.21). The credit payment processing is executed (Step S75 of Fig.21). The information indicating that the credit use is established is returned to the store terminal / EC site 400 (Step S76 in Fig.21). If the state of the availability status information 510C is "invalid state" (not shown in the figure), the credit payment processing is rejected, and the information indicating that the credit use is not established is returned from the payment management system 530 to the shop terminal / EC site 400 (not shown in the figure).

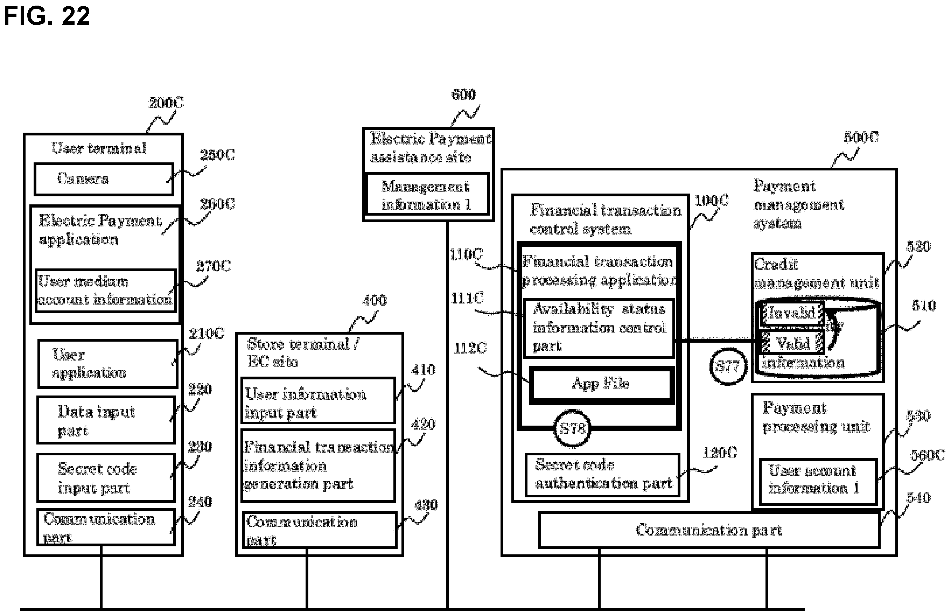

The availability status information state control part 111C automatically executes "default invalid state switching processing" for returning to the invalid state of the availability status information 510C (Step S77 in Fig.22).

The financial transaction processing application 110C executes "close processing" for closing the financial transaction processing application file 112C (Step S78 in Fig.22).

In this case, when "approval information" from the user is confirmed by the Step S69 to the Step S78 shown in FIG.20, that is, if there is input of the close secret code for closing, the following processing is performed at once, and the operation is executed up to closing processing for the financial transaction processing application file.

As described above, in the financial transaction control system 100C of Embodiment 3, when the credit use is executed, the availability status information is switched back to the "invalid state" as a series of processing. A message indicating that the availability status information is switched back to the "invalid state" can be displayed (Fig.24 (5)).

If necessary, the user application 210C is ended (Fig.24 (6)), and the user application 210C is closed (Fig.24 (7)). Further, icon selection of the user application 210C is released (Fig.24 (8)).

While the preferred embodiments of the financial transaction control system 100 and the user application 210 of the present invention have been shown and described above, it is understood that various changes can be made without departing from the scope of the present invention.

### INDUSTRIAL APPLICABILITY

The financial transaction control system of the present invention can be widely applied to various credit utilization systems and various debit utilization systems. The use of the application and the service processing system is not limited.

### DESCRIPTION OF REFERENCE NUMERALS

- 100: Financial transaction control system
- 110: Financial transaction processing application
- 111: Availability status information state control part
- 112: Financial transaction processing application file
- 120: Secret code authentication part
- 200: User terminal
- 210: User applications
- 220: Data input part
- 230: Secret code input part
- 240: Communication part
- 250: Cameras
- 260: Electronic payment applications
- 270: User account information
- 300: User ID storage medium
- 400: Store terminal / EC site
- 410: User information input part
- 420: Financial transaction information generation part
- 430: Communication part
- 500: Payment management system
- 510: Availability status information
- 520: Credit management part
- 530: Payment processing unit
- 540: Communication part
- 560: User account information

## Claims

1. A financial transaction control system for applying to a payment management system accompanying a credit use or a debit use, comprising:
a financial transaction processing application file corresponding to each user account;
a financial transaction processing application program that performs controlling each financial transaction processing program for each user account;
wherein an open secret code and a close secret code are set in the financial transaction processing application file,
wherein the financial transaction processing application program comprises;
an open processing program for opening the financial transaction processing application file on the condition that the financial transaction processing application program performs authentication between an open secret code included in a financial transaction information input by a user matching with the set open secret code in the financial transaction processing application file,
an editing processing program for editing the financial transaction information to the financial transaction processing application file according to a financial transaction information from a financial transaction entity to the user account,
an approval request processing program for sending approval request information whether or not approving the financial transaction information to a user terminal, and waiting for the reply of an approval information from the user terminal,
a transmitting processing program for transmitting the edited financial data in the financial transaction processing application file to the payment management system and
a close processing program for closing the financial transaction processing application file on the condition that the financial transaction processing application program performs authentication between an close secret code included in the approval information input by the user matching with the set close secret code.

2. A financial transaction control system according to claim 1,
wherein the open secret code is a biometric information of the user and the close secret code is a biometric information of the user.

3. A financial transaction control system according to claim 1 or 2,
wherein the user ID information related to the financial transaction is included in the user medium, and the user utilizes the user medium to input the user ID information in the financial transaction.

4. A financial transaction control system according to claim 1 or 2,
wherein the user ID information related to the financial transaction is included in the user terminal, and the user utilizes the user terminal to input the user ID information in the financial transaction.

5. A financial transaction control system according to any one of claims 1 to 4,
wherein the financial transaction processing application includes an availability status information state control part for controlling switching of availability status information indicating a state of validity of the user account or a state in which the financial transaction acceptance is possible,
the financial transaction processing application performs default invalid processing program via the availability status information state control part for maintaining the availability status information in an invalid state in a normal state, and
on the basis of the reply of the approval information from the user terminal, the switching processing program of the availability status information to the temporary effective state, the transmitting processing program, the default invalid processing program of the availability status information, and the closing processing program are performed consecutively.

6. A financial transaction control system according to claim 5, wherein
when the setting of the availability status information, based on the credit information indicating the validity of the user account by the payment management system or indicating the validity status of the financial transaction acceptance for the user account, indicates an effective valid state, the payment management system accepts switching of the availability status information by giving priority to switching control of the use availability status information by the availability status information state control part, and
the setting of the availability status information, indicating the validity status of the user account set on the basis of the credit information on the payment management system or indicating the validity status of the financial transaction acceptance for the user account, is set to indicate an invalid state, the payment management system does not accept switching control of the availability status information by the availability status information state control part, and maintains an invalid state of the availability status information.

7. A financial transaction control system according to claim 5, wherein
when the setting of the availability status information, based on the credit information indicating the validity of the user account by the payment management system or indicating the validity status of the financial transaction acceptance for the user account, indicates an effective valid state, the payment management system accepts switching of the availability status information by giving priority to the switching control of the availability status information by the availability status information state control part, and
the setting of the availability status information, indicating the validity status of the user account set on the basis of the credit information on the payment management system or indicating the validity status of the financial transaction acceptance for the user account, is set to indicate an invalid state, the payment management system can select accepting switching control of the availability status information based on the credit information of the user account or giving priority to the switching control of the availability status information by the availability status information state control part.

8. A user application installed in a user terminal or available by an application service provider system, cooperating with the financial transaction control system according to any one of claims 1 to 7, comprising,
a financial transaction processing request information generation processing program for generating the financial transaction processing request information, and
a financial transaction processing request information transmission processing program for transmitting the generated financial transaction processing request information to the financial transaction processing application;
an approval information generation processing program for generating the approval information, and
an approval information reply processing program for returning the generated approval information to the financial transaction processing application.

9. A user application according to claim 8,
wherein the financial transaction is a transaction accompanying a credit use with a credit card or a debit use with a debit card.

10. A user application according to claim 8,
wherein the financial transaction is a transaction accompanying a credit use or a debit use with an IC device of a non-card type or a micro IC device embedded in a human body.

11. A financial transaction control method for applying to a payment management method accompanying a credit use or a debit use, comprising:
using financial transaction processing application file generated for each user account, and a financial transaction processing application for controlling financial transaction processing to the user's account,
wherein an open secret code and a close secret code are set in the financial transaction processing application file,
an open processing for opening the financial transaction processing application file on the condition that the financial transaction processing application authenticates an open secret code included in a financial transaction information input by a user matching with the set open secret code,
an editing processing for editing the financial transaction information to the financial transaction processing application file according to a financial transaction information from a financial transaction entity to the user account,
an approval request processing for sending approval request information whether or not approving the financial transaction information to a user terminal, and waiting for the reply of an approval information from the user terminal, and
a transmitting processing for transmitting the edited financial data in the financial transaction processing application file to the payment management system and a close processing for closing the financial transaction processing application file on the condition that the financial transaction processing application authenticates a close secret code included in the approval information input by the user matching with the set close secret code.
